# EUROPEAN PATENT APPLICATION

(11) **EP 4 027 230 A1**
(43) Date of publication of application: **13.07.2022**
(21) Application number: 20867754.2
(22) Date of filing: 19.08.2020
(51) Int. Cl.: G06F 3/0488

(54) **METHOD FOR OPERATING ELECTRONIC DEVICE AND ELECTRONIC DEVICE**

(30) Priority: 29.09.2019 CN 201910936451
(71) Applicant: Huawei Technologies Co., Ltd., Shenzhen, Guangdong 518129 (CN)
(72) Inventor: WANG, Yan, Shenzhen, Guangdong 518129 (CN); ZHENG, Aihua, Shenzhen, Guangdong 518129 (CN); CHEN, Hao, Shenzhen, Guangdong 518129 (CN); ZHANG, Zhihao, Shenzhen, Guangdong 518129 (CN); YANG, Xiaoyun, Shenzhen, Guangdong 518129 (CN)
(74) Representative: MERH-IP Matias Erny Reichl Hoffmann Patentanwälte PartG mbB
(86) International application number: PCT/CN2020/110100
(87) International publication number: WO 2021/057343

(57) **Abstract**

An operation method for an electronic device and an electronic device are provided, and relate to the field of electronic devices. In a split-screen display scenario, a function of quickly opening a specific interface by using an entered gesture is implemented. When a screen of the electronic device is split for display, the electronic device receives different operations for a side that is of a single window and that is closely adjacent to another window, and the electronic device may execute a corresponding event only for the window, for example, display a previous-level interface of a current interface in the window, display a desktop in the window, or display a task list interface in the window, and an interface displayed in the another window remains unchanged.

## Description

This application claims priority to Chinese Patent Application No. 201910936451.9, filed with the China National Intellectual Property Administration on September 29, 2019 and entitled "OPERATION METHOD FOR ELECTRONIC DEVICE AND ELECTRONIC DEVICE", which is incorporated herein by reference in its entirety.

### TECHNICAL FIELD

This application relates to the field of electronic devices, and in particular, to an operation method for an electronic device and an electronic device.

### BACKGROUND

Nowadays, an electronic device such as a mobile phone has become an indispensable communication tool in people's daily life and work, and currently a touchscreen electronic device such as a touchscreen mobile phone is most widely applied. With continuous development of screen technologies, a touchscreen of the touchscreen mobile phone is increasingly enlarged in size, and is enlarged from the early popular 3 inches to 4 inches, 5 inches, 6 inches, or even a larger size.

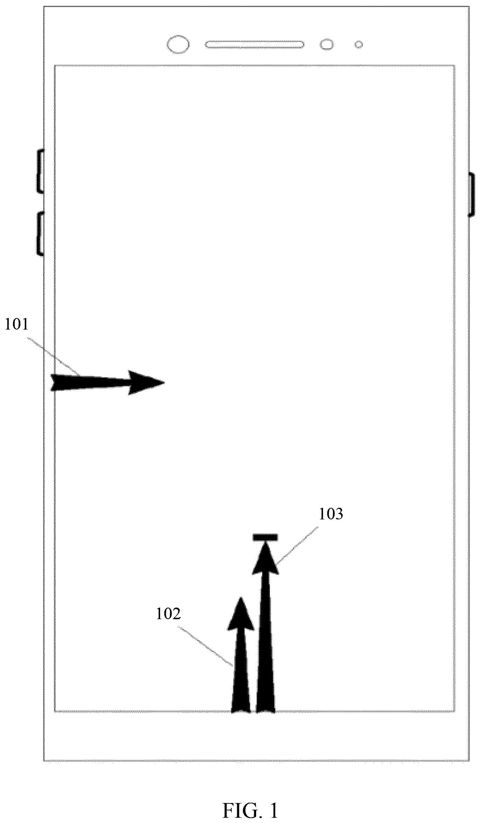

To facilitate an operation performed by a user on a touchscreen mobile phone, currently, most touchscreen mobile phones support a function of quickly opening a specific interface such as a desktop (or referred to as a home screen (home screen)), a previous-level interface of a current interface, or a multi-task interface based on a gesture entered by the user on a touchscreen. For example, as shown in FIG. 1, the user's finger slides from a left edge (or a right edge) of the touchscreen into the touchscreen (as shown by an operation track 101 in FIG. 1), and the touchscreen mobile phone displays the previous-level interface of the current interface. When the user's finger slides upwards from a lower edge (or referred to as a bottom edge) of the touchscreen (as shown by an operation track 102 in FIG. 1), the touchscreen mobile phone displays the desktop. After the user's finger slides upwards from the lower edge of the touchscreen and pauses (as shown by an operation track 103 in FIG. 1), the touchscreen mobile phone displays the multi-task interface.

However, the foregoing function of quickly opening a specific interface by using the entered gesture currently supports only a scenario in which a single window is displayed in full screen, and is not applicable to a scenario in which a plurality of windows are displayed on split screens, that is, a split-screen display scenario.

### SUMMARY

Embodiments of this application provide an operation method for an electronic device and an electronic device, and when a plurality of windows are displayed on split screens, that is, in a split-screen display scenario, a function of quickly opening a specific interface by using an entered gesture is implemented.

The following technical solutions are used in this application.

According to a first aspect, an embodiment of this application provides an operation method. The method may be applied to an electronic device including a touchscreen, where at least two windows are displayed on the touchscreen, different interfaces are separately displayed in the at least two windows, the at least two windows include a first window, and a first interface of a first application is displayed in the first window. The method may include: The electronic device receives a first operation for the first window, and the electronic device displays a second interface of the first application in the first window in response to the first operation, where the second interface is a previous-level interface of the first interface, and the first operation is a first sliding operation in which a start point is a first side of the first window and a sliding direction is away from the first side; or the electronic device receives a second operation for the first window, and the electronic device displays a home screen in the first window in response to the second operation, where the second operation is a second sliding operation in which a start point is a first side of the first window and a sliding direction is first away from the first side and then towards the first side, or the second operation is a third sliding operation in which a start point is a first side of the first window and a sliding direction is away from the first side; or the electronic device receives a third operation for the first window, and the electronic device displays a task list interface in the first window in response to the third operation, where the third operation is a fourth sliding operation in which a start point is a first side of the first window and a sliding direction is away from the first side, and the task list interface includes at least one of the following application identifier combinations: a combination of application identifiers that have been recently displayed on split screens on the touchscreen, a combination of predefined application identifiers displayed on split screens, and a combination of application identifiers displayed on split screens and determined by the electronic device based on a use habit. The at least two windows further include a second window adjacent to the first window, and the first side is a side that is of the first window and that is closely adjacent to the second window.

In this technical solution, during split-screen display, for different interfaces displayed in a plurality of windows, a user may execute an event such as returning or exiting only for one of the plurality of windows by executing a corresponding gesture. When the plurality of windows are displayed on split screens, that is, in a split-screen display scenario, a function of quickly opening a specific interface by using an entered gesture is implemented. Efficient interaction between the electronic device and the user is implemented, and user experience is improved.

In a possible implementation, that the electronic device displays the second interface of the first application in the first window in response to the first operation may include: The electronic device displays the second interface of the first application in the first window in response to the first operation when determining that the first interface is not an initial interface of the first application. When the user performs the first operation in the first window, if an interface currently displayed in the first window is not the initial interface of the first application, in response to the first operation, the electronic device may enable the interface that is of the first interface and that is displayed in the first window to return to a previous level.

In another possible implementation, the method may further include: The electronic device displays the home screen in the first window in response to the first operation when determining that the first interface is an initial interface of the first application. When the user performs the first operation in the first window, if an interface currently displayed in the first window is the initial interface of the first application, in response to the first operation, the electronic device may enable the first application displayed in the first window to exit split-screen display; in other words, the home screen is displayed in the first window.

In another possible implementation, duration of the first sliding operation is less than or equal to first preset duration; a sliding distance of the first sliding operation is less than or equal to a first preset distance; or the sliding direction of the first sliding operation is a first preset direction. It may be learned that, if the user performs a sliding operation (for example, a short sliding operation) for a single window, the electronic device may be triggered to execute, for an application in the window, an event of returning to a previous-level interface.

In another possible implementation, duration of sliding in a direction away from the first side in the second sliding operation is less than or equal to second preset duration; a sliding distance in a direction away from the first side in the second sliding operation is less than or equal to a second preset distance; duration of the third sliding operation is greater than first preset duration; a sliding distance of the third sliding operation is greater than a first preset distance; or the sliding direction of the third sliding operation is a second preset direction. It may be learned that, if the user performs a sliding operation (for example, a long sliding operation) for a single window, the electronic device may be triggered to execute, for an application in the window, an event of exiting split-screen display.

In another possible implementation, duration of the fourth sliding operation is greater than third preset duration, and there is a pause of predetermined duration after sliding; a sliding distance of the fourth sliding operation is greater than a third preset distance, and there is a pause of predetermined duration after sliding; or the sliding direction of the fourth sliding operation is a third preset direction. It may be learned that, if the user performs a sliding operation (for example, a long sliding and pausing operation) for a single window, the electronic device may be triggered to execute an event of displaying the task list interface in the window.

In another possible implementation, the method may further include: The electronic device receives a fourth operation for the first side of the first window; and the electronic device displays the task list interface in full screen on the touchscreen in response to the fourth operation. It may be learned that, when the user performs an operation for a boundary between the two windows, the electronic device may be triggered to execute an event of displaying the task list interface in full screen.

In another possible implementation, the fourth operation is a sliding operation in which a start point is one end of the first side and a sliding direction is towards the other end of the first side; or the fourth operation is a sliding operation in which a start point is one end of the first side, a sliding direction is towards the other end of the first side, and there is a pause of predetermined duration after sliding.

In another possible implementation, the method may further include: The electronic device receives a fifth operation for the first window, and receives a fifth operation for the second window; and the electronic device displays the task list interface in full screen on the touchscreen in response to the fifth operation for the first window and the fifth operation for the second window. It may be learned that, when the user performs an operation for each of the two windows, the electronic device may be triggered to execute an event of displaying the task list interface in full screen.

In another possible implementation, the fifth operation is a sliding operation in which a start point is a second side of the window, a sliding direction is away from the second side, duration is greater than third preset duration, and there is a pause of predetermined duration after sliding; or the fifth operation is a sliding operation in which a start point is a second side of the window, a sliding direction is away from the second side, a sliding distance is greater than a third preset distance, and there is a pause of predetermined duration after sliding. The second side may be a side that is of the window and that is closely adjacent to another window, or may be a side that is of the window and that is closely adjacent to the touchscreen. The second side may be the same as or different from the first side.

In another possible implementation, the method may further include: The electronic device receives a sixth operation for the first window, and receives a sixth operation for the second window; and the electronic device displays the home screen in full screen on the touchscreen in response to the sixth operation for the first window and the sixth operation for the second window. It may be learned that, when the user performs an operation for each of the two windows, the electronic device may be triggered to execute an event of displaying the home screen in full screen.

In another possible implementation, the sixth operation is a sliding operation in which a start point is a second side of the window, a sliding direction is away from the second side, and duration is greater than second preset duration; or the sixth operation is a sliding operation in which a start point is a second side of the window, a sliding direction is away from the second side, and a sliding distance is greater than a third preset distance.

According to a second aspect of this application, an operation method is provided. The method may be applied to an electronic device including a touchscreen, where a first window and a second window are displayed on the touchscreen, a first interface is displayed in the first window, a second interface is displayed in the second window, and the first interface is different from the second interface. The method may include: The electronic device receives a first operation for the first window; and in response to the first operation, the electronic device displays the second interface in full screen on the touchscreen, and displays the first interface in a hover box in the second interface; or in response to the first operation, the electronic device displays a home screen in the first window, and displays the first interface in a hover box on the home screen and the second interface that are displayed on split screens.

In this technical solution, during split-screen display, for a plurality of windows displayed on the touchscreen, when receiving an operation for one of the windows, the electronic device may display an interface in the window in a hover box. In addition, the electronic device may display a desktop in full screen or display a desktop at a position of an original window. In this way, it can be convenient for a user to select and open another application from the desktop. Efficient interaction between the electronic device and the user is implemented, and user experience is improved.

In a possible implementation, the first operation is a sliding operation in which a start point is a first side of the first window and a sliding direction is away from the first side; or the first operation is a sliding operation in which a start point is a first side of the first window, a sliding direction is away from the first side, and there is a pause of predetermined duration after sliding.

In another possible implementation, the first side is a side that is of the first window and that is closely adjacent to the second window, or the first side is a side that is of the first window and that is closely adjacent to the touchscreen.

According to a third aspect, an embodiment of this application provides an operation method. The method may be applied to an electronic device including a touchscreen, and an interface of a first application is displayed on the touchscreen. The method may include: The electronic device receives a first operation; and in response to the first operation, the electronic device displays a home screen on the touchscreen, and displays the interface of the first application in a hover box on the home screen.

In this technical solution, when the electronic device displays the interface of the first application, if the electronic device receives a corresponding operation, the electronic device may display the interface of the first application in a hover box, and display a desktop in full screen. In this way, it can be convenient for a user to select and open another application from the desktop. Efficient interaction between the electronic device and the user is implemented, and user experience is improved.

In a possible implementation, the first operation is a sliding operation in which a start point is a side edge of the touchscreen, a sliding direction is away from the side edge, and a sliding distance is greater than a preset threshold; or the first operation is a sliding operation in which a start point is a side edge of the touchscreen, a sliding direction is away from the side edge, a sliding distance is greater than a preset threshold, and there is a pause of predetermined duration after sliding.

According to a fourth aspect, an embodiment of this application provides an electronic device. The electronic device may include a processor, a memory, and a touchscreen. At least two windows are displayed on the touchscreen, and different interfaces are separately displayed in the at least two windows. The at least two windows include a first window, and a first interface of a first application is displayed in the first window. The processor, the touchscreen, and the memory are coupled, and the memory is configured to store computer program code. The computer program code includes computer instructions. When the computer instructions are executed by the electronic device, the electronic device is enabled to perform the following operations: receiving a first operation for the first window, and displaying a second interface of the first application in the first window in response to the first operation, where the second interface is a previous-level interface of the first interface, and the first operation is a first sliding operation in which a start point is a first side of the first window and a sliding direction is away from the first side; or receiving a second operation for the first window, and displaying a home screen in the first window in response to the second operation, where the second operation is a second sliding operation in which a start point is a first side of the first window and a sliding direction is first away from the first side and then towards the first side, or the second operation is a third sliding operation in which a start point is a first side of the first window and a sliding direction is away from the first side; or receiving a third operation for the first window, and displaying a task list interface in the first window in response to the third operation, where the third operation is a fourth sliding operation in which a start point is a first side of the first window and a sliding direction is away from the first side, and the task list interface includes at least one of the following application identifier combinations: a combination of application identifiers that have been recently displayed on split screens on the touchscreen, a combination of predefined application identifiers displayed on split screens, and a combination of application identifiers displayed on split screens and determined based on a use habit. The at least two windows further include a second window adjacent to the first window, and the first side is a side that is of the first window and that is closely adjacent to the second window.

In a possible implementation, the displaying a second interface of the first application in the first window in response to the first operation may include: displaying the second interface of the first application in the first window in response to the first operation when it is determined that the first interface is not an initial interface of the first application.

In another possible implementation, when the computer instructions are executed by the electronic device, the electronic device is enabled to further perform the following operation: displaying the home screen in the first window in response to the first operation when it is determined that the first interface is an initial interface of the first application.

In another possible implementation, duration of the first sliding operation is less than or equal to first preset duration; a sliding distance of the first sliding operation is less than or equal to a first preset distance; or the sliding direction of the first sliding operation is a first preset direction.

In another possible implementation, duration of sliding in a direction away from the first side in the second sliding operation is less than or equal to second preset duration; a sliding distance in a direction away from the first side in the second sliding operation is less than or equal to a second preset distance; the sliding direction of the second sliding operation is a second preset direction; duration of the third sliding operation is greater than first preset duration; or a sliding distance of the third sliding operation is greater than a first preset distance.

In another possible implementation, duration of the fourth sliding operation is greater than third preset duration, and there is a pause of predetermined duration after sliding; a sliding distance of the fourth sliding operation is greater than a third preset distance, and there is a pause of predetermined duration after sliding; or the sliding direction of the fourth sliding operation is a third preset direction.

In another possible implementation, when the computer instructions are executed by the electronic device, the electronic device is enabled to further perform the following operations: receiving a fourth operation for a boundary between the first window and the second window, where the boundary is a side that is of the first window and that is closely adjacent to the second window, or the boundary is a side that is of the second window and that is closely adjacent to the first window; and displaying the task list interface in full screen on the touchscreen in response to the fourth operation.

In another possible implementation, the fourth operation is a sliding operation in which a start point is one end of the boundary and a sliding direction is towards the other end of the first boundary; or the fourth operation is a sliding operation in which a start point is one end of the boundary, a sliding direction is towards the other end of the boundary, and there is a pause of predetermined duration after sliding.

In another possible implementation, when the computer instructions are executed by the electronic device, the electronic device is enabled to further perform the following operations: receiving a fifth operation for the first window, and receiving a fifth operation for the second window; and displaying the task list interface in full screen on the touchscreen in response to the fifth operation for the first window and the fifth operation for the second window.

In another possible implementation, the fifth operation is a sliding operation in which a start point is a lower edge of the window, a sliding direction is away from the lower edge, duration is greater than third preset duration, and there is a pause of predetermined duration after sliding; or the fifth operation is a sliding operation in which a start point is a lower edge of the window, a sliding direction is away from the lower edge, a sliding distance is greater than a third preset distance, and there is a pause of predetermined duration after sliding.

In another possible implementation, when the computer instructions are executed by the electronic device, the electronic device is enabled to further perform the following operations: receiving a sixth operation for the first window, and receiving a sixth operation for the second window; and displaying the home screen in full screen on the touchscreen in response to the sixth operation for the first window and the sixth operation for the second window.

In another possible implementation, the sixth operation is a sliding operation in which a start point is a lower edge of the window, a sliding direction is away from the lower edge, and duration is greater than second preset duration; or the sixth operation is a sliding operation in which a start point is a lower edge of the window, a sliding direction is away from the lower edge, and a sliding distance is greater than a third preset distance.

According to a fifth aspect, an embodiment of this application provides an electronic device. The electronic device may include a processor, a memory, and a touchscreen. A first window and a second window are displayed on the touchscreen, a first interface is displayed in the first window, a second interface is displayed in the second window, and the first interface is different from the second interface. The processor, the touchscreen, and the memory are coupled, and the memory is configured to store computer program code. The computer program code includes computer instructions. When the computer instructions are executed by the electronic device, the electronic device is enabled to perform the following operations: receiving a first operation for the first window; and in response to the first operation, displaying the second interface in full screen on the touchscreen, and displaying the first interface in a hover box in the second interface; or in response to the first operation, displaying a home screen in the first window, and displaying the first interface in a hover box on the home screen and the second interface that are displayed on split screens.

In a possible implementation, the first operation is a sliding operation in which a start point is a first side of the first window and a sliding direction is away from the first side; or the first operation is a sliding operation in which a start point is a first side of the first window, a sliding direction is away from the first side, and there is a pause of predetermined duration after sliding.

In another possible implementation, the first side is a side that is of the first window and that is closely adjacent to the second window, or the first side is a side that is of the first window and that is closely adjacent to the touchscreen.

According to a sixth aspect, an embodiment of this application provides an electronic device. The electronic device may include a processor, a memory, and a touchscreen. An interface of a first application is displayed on the touchscreen. The processor, the touchscreen, and the memory are coupled, and the memory is configured to store computer program code. The computer program code includes computer instructions. When the computer instructions are executed by the electronic device, the electronic device is enabled to perform the following operations: receiving a first operation; and in response to the first operation, displaying a home screen on the touchscreen, and displaying the interface of the first application in a hover box on the home screen.

In a possible implementation, the first operation is a sliding operation in which a start point is a side edge of the touchscreen, a sliding direction is away from the side edge, and a sliding distance is greater than a preset threshold; or the first operation is a sliding operation in which a start point is a side edge of the touchscreen, a sliding direction is away from the side edge, a sliding distance is greater than a preset threshold, and there is a pause of predetermined duration after sliding.

According to a seventh aspect, an embodiment of this application provides a computer-readable storage medium, including computer software instructions. When the computer software instructions are run on an electronic device, the electronic device is enabled to perform the operation method according to any one of the first aspect or the possible implementations of the first aspect, the second aspect or the possible implementations of the second aspect, or the third aspect or the possible implementations of the third aspect.

According to an eighth aspect, an embodiment of this application provides a computer program product. When the computer program product is run on a computer, the computer is enabled to perform the operation method according to any one of the first aspect or the possible implementations of the first aspect, the second aspect or the possible implementations of the second aspect, or the third aspect or the possible implementations of the third aspect.

According to a ninth aspect, an embodiment of this application provides an apparatus, and the apparatus has a function of implementing behavior of the electronic device in the method in the first aspect, the second aspect, or the third aspect. The function may be implemented by hardware, or may be implemented by hardware executing corresponding software. The hardware or software includes one or more modules corresponding to the function, for example, an input unit or module and a display unit or module.

It should be understood that descriptions of technical features, technical solutions, beneficial effects, or similar statements in this application do not imply that all features and advantages can be implemented in any single embodiment. On the contrary, it may be understood that the descriptions of the features or the beneficial effects mean that at least one embodiment includes a specific technical feature, technical solution, or beneficial effect. Therefore, the descriptions of the technical features, the technical solutions, or the beneficial effects in this specification may not necessarily be specific to a same embodiment. Further, the technical features, technical solutions, or beneficial effects described in embodiments may be combined in any proper manner. A person skilled in the art may understand that a specific embodiment may be implemented without using one or more specific technical features, technical solutions, or beneficial effects of the embodiment. In other embodiments, additional technical features and beneficial effects may be further identified in a specific embodiment that does not reflect all the embodiments.

### BRIEF DESCRIPTION OF DRAWINGS

FIG. 1 is an example diagram of an implementation of triggering rapid opening of a specific interface in a conventional technology;
FIG. 2 is a schematic diagram of a structure of an electronic device according to an embodiment of this application;
FIG. 3 is a schematic diagram of composition of a software architecture of an electronic device according to an embodiment of this application;
FIG. 4 is a schematic flowchart of an operation method for an electronic device according to an embodiment of this application;
FIG. 5(a), FIG. 5(b), and FIG. 5(c) are a schematic diagram of a display interface according to an embodiment of this application;
FIG. 6 is a schematic diagram of another display interface according to an embodiment of this application;
FIG. 7 is a schematic diagram of still another display interface according to an embodiment of this application;
FIG. 8(a) and FIG. 8(b) are a schematic diagram of still another display interface according to an embodiment of this application;
FIG. 9(a) and FIG. 9(b) are a schematic diagram of still another display interface according to an embodiment of this application;
FIG. 10(a) and FIG. 10(b) are a schematic diagram of still another display interface according to an embodiment of this application;
FIG. 11(a) and FIG. 11(b) are a schematic diagram of still another display interface according to an embodiment of this application;
FIG. 12(a) and FIG. 12(b) are a schematic diagram of still another display interface according to an embodiment of this application;
FIG. 13(a) and FIG. 13(b) are a schematic diagram of still another display interface according to an embodiment of this application;
FIG. 14(a) and FIG. 14(b) are a schematic diagram of still another display interface according to an embodiment of this application;
FIG. 15(a) and FIG. 15(b) are a schematic diagram of still another display interface according to an embodiment of this application;
FIG. 16(a) and FIG. 16(b) are a schematic diagram of still another display interface according to an embodiment of this application;
FIG. 17(a) and FIG. 17(b) are a schematic diagram of still another display interface according to an embodiment of this application;
FIG. 18(a) and FIG. 18(b) are a schematic diagram of still another display interface according to an embodiment of this application; and
FIG. 19 is a schematic diagram of still another display interface according to an embodiment of this application.

### DESCRIPTION OF EMBODIMENTS

The following terms "first" and "second" are merely used for a purpose of description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "a plurality of' means two or more than two.

To make full use of an increasingly large touchscreen, split-screen display becomes a relatively common use scenario of an electronic device such as a touchscreen mobile phone. An embodiment of this application provides an operation method for an electronic device, and the method may be applied to the electronic device. The electronic device supports a split-screen display function. During split-screen display, the electronic device may divide a touchscreen of the electronic device into a plurality of display areas. Different windows may be separately displayed in the plurality of display areas, and the electronic device may display different interfaces in different windows. Different interfaces in this embodiment may be interfaces of different applications included in the electronic device, or may be different interfaces of a same application.

In this embodiment of this application, in a scenario in which a plurality of windows are displayed on split screens, that is, during split-screen display, a user may quickly open a specific interface such as a desktop, a previous-level interface of a current interface, or a task list interface for a single window by using an entered gesture, so that efficient interaction between the electronic device and the user is implemented.

A plurality of applications may be installed on the electronic device. The application in embodiments of this application may be an embedded application (that is, a system application of the electronic device), or may be a downloadable application. The embedded application is an application provided as a part of an implementation of the electronic device. The downloadable application is an application that can provide an internet protocol multimedia subsystem (internet protocol multimedia subsystem, IMS) connection of the downloadable application. The downloadable application may be an application preinstalled on the electronic device, or may be a third-party application downloaded and installed by the user on the electronic device.

It should be noted that the electronic device in embodiments of this application may be a device such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, or a media player. A specific form of the device is not specifically limited in embodiments of this application.

In addition, the electronic device in embodiments of this application may be an electronic device with a non-foldable screen or an electronic device with a foldable screen. The electronic device with a foldable screen may be an electronic device having a foldable screen. A touchscreen of the electronic device with a non-foldable screen may be a planar touchscreen, or may be a curved screen with an arc on a side edge.

The following describes the implementations of embodiments of this application in detail with reference to accompanying drawings.

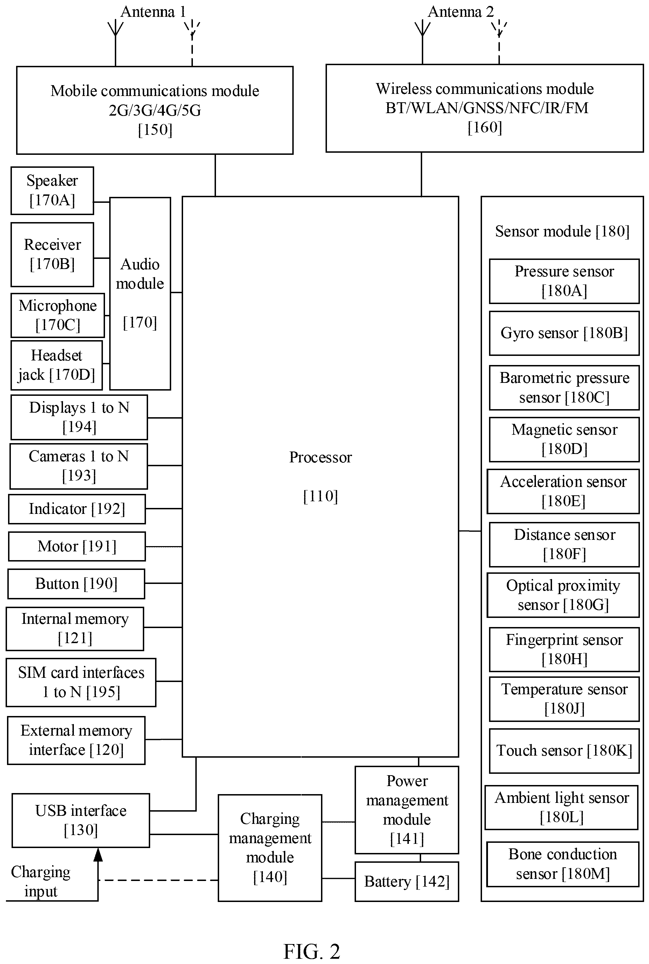

FIG. 2 is a schematic diagram of a structure of an electronic device according to an embodiment of this application. As shown in FIG. 2, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in embodiments does not constitute a specific limitation on the electronic device. In other embodiments, the electronic device may include more or fewer components than those shown in the figure, or some components are combined, or some components are split, or different component arrangements are used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or an input from the charging management module 140, and supplies power to the processor 110, the internal memory 121, an external memory, the display 194, the camera 193, the wireless communications module 160, and the like. The power management module 141 may be further configured to monitor parameters such as a battery capacity, a battery cycle count, and a battery state of health (electric leakage and impedance). In other embodiments, the power management module 141 may alternatively be disposed in the processor 110. In other embodiments, the power management module 141 and the charging management module 140 may alternatively be disposed in a same device.

A wireless communication function of the electronic device may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna of the electronic device may be configured to cover one or more communication frequency bands. Different antennas may be further multiplexed, to improve antenna utilization. For example, the antenna 1 may be multiplexed as a diversity antenna in a wireless local area network. In other embodiments, the antenna may be used in combination with a tuning switch.

The mobile communications module 150 may provide a solution to wireless communication such as 2G/3G/4G/5G applied to the electronic device. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit a processed electromagnetic wave to a modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (which is not limited to the speaker 170A, the receiver 170B, or the like), or displays an image or a video on the display 194. In some embodiments, the modem processor may be an independent component. In other embodiments, the modem processor may be independent of the processor 110, and is disposed in a same device as the mobile communications module 150 or another function module.

The wireless communications module 160 may provide a solution to wireless communication applied to the electronic device, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communications module 160 may be one or more components integrating at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation.

In some embodiments, in the electronic device, the antenna 1 is coupled to the mobile communications module 150, and the antenna 2 is coupled to the wireless communications module 160, so that the electronic device can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or an IR technology. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 194, where N is a positive integer greater than 1.

The electronic device may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transform on frequency energy.

The video codec is configured to compress or decompress a digital video. The electronic device may support one or more video codecs. Therefore, the electronic device can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. With reference to a structure of a biological neural network, for example, with reference to a transfer mode between neurons of a human brain, the NPU quickly processes input information, and may further continuously perform self-learning. The NPU may be used to implement an application such as intelligent cognition of the electronic device, for example, image recognition, facial recognition, voice recognition, and text understanding.

The external memory interface 120 may be configured to connect to an external memory card, for example, a micro SD card, to extend a storage capability of the electronic device. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The processor 110 runs the instructions stored in the internal memory 121, to perform various function applications and data processing of the electronic device. For example, in this embodiment of this application, during split-screen display, the processor 110 may execute the instructions stored in the internal memory 121, and when receiving a touch operation performed by a user for a window in a specific display area of the touchscreen, the processor 110 may execute a corresponding event in response to the touch operation, for example, exit or switch to the background to run an application displayed in the window, or return from an interface of an application displayed in the window to a previous level. The internal memory 121 may include a program storage area and a data storage area. The program storage area may store an operating system, an application (for example, a sound playing function or an image playing function) required by at least one function, and the like. The data storage area may store data (for example, audio data or a phone book) created in a process of using the electronic device. In addition, the internal memory 121 may include a high-speed random access memory, and may further include a nonvolatile memory such as at least one magnetic disk storage device, a flash memory, or a universal flash storage (universal flash storage, UFS).

The electronic device may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. The electronic device may be used to listen to music or answer a hands-free call through the speaker 170A.

The receiver 170B, also referred to as an "earpiece", is configured to convert an audio electrical signal into a sound signal. When a call is answered or voice information is received by using the electronic device, the receiver 170B may be put close to a human ear to receive a voice.

The microphone 170C, also referred to as a "mike" or a "mic", is configured to convert a sound signal into an electrical signal. When a user makes a call, sends voice information, or needs to use a voice assistant to trigger the electronic device to perform some functions, the user may make a sound by putting the mouth close to the microphone 170C, and input a sound signal to the microphone 170C. At least one microphone 170C may be disposed in the electronic device. In other embodiments, two microphones 170C may be disposed in the electronic device, to implement a noise reduction function in addition to collecting a sound signal. In other embodiments, three, four, or more microphones 170C may alternatively be disposed in the electronic device, to collect a sound signal and reduce noise. The microphones may further identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device determines strength of pressure based on a change of the capacitance. When a touch operation is performed on the display 194, the electronic device detects strength of the touch operation through the pressure sensor 180A. The electronic device may further calculate a touch position based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on a Messages icon, an instruction for creating a new SMS message is executed.

The gyro sensor 180B may be configured to determine a motion posture of the electronic device. In some embodiments, the gyro sensor 180B may be used to determine angular velocities of the electronic device around three axes (namely, axes x, y, and z). The gyro sensor 180B may be configured to perform image stabilization during photographing. For example, when a shutter is pressed, the gyro sensor 180B detects a jitter angle of the electronic device, calculates, based on the angle, a distance for which a lens module needs to compensate, and enables the lens to offset jitter of the electronic device through reverse motion, to implement image stabilization. The gyro sensor 180B may be further used in a navigation scenario and a motion-sensing game scenario.

The barometric pressure sensor 180C is configured to measure barometric pressure. In some embodiments, the electronic device calculates an altitude by using the atmospheric pressure measured by the barometric pressure sensor 180C, to assist in positioning and navigation.

The magnetic sensor 180D includes a Hall sensor. The electronic device may detect opening and closing of a flip cover through the magnetic sensor 180D. In some embodiments, when the electronic device is a clamshell phone, the electronic device may detect opening and closing of a flip cover through the magnetic sensor 180D. Further, a feature such as automatic unlocking upon opening of the flip cover is set based on a detected opening or closing state of the flip cover or a detected opening or closing state of the flip cover.

The acceleration sensor 180E may detect magnitude of acceleration of the electronic device in various directions (usually on three axes). A magnitude and direction of gravity can be detected when the electronic device is stationary. The acceleration sensor 180E may be further configured to identify a posture of the electronic device, and is used in an application such as switching between landscape mode and portrait mode or a pedometer.

The distance sensor 180F is configured to measure a distance. The electronic device may measure a distance through infrared or laser. In some embodiments, in a photographing scenario, the electronic device may measure a distance by using the distance sensor 180F, to implement quick focusing.

The optical proximity sensor 180G may include, for example, a light emitting diode (LED) and an optical detector such as a photodiode. The light-emitting diode may be an infrared light-emitting diode. The electronic device may emit infrared light by using the light emitting diode. The electronic device detects infrared reflected light from a nearby object by using the photodiode. When detecting sufficient reflected light, the electronic device may determine that there is an object near the electronic device. When detecting insufficient reflected light, the electronic device may determine that there is no object near the electronic device. The electronic device may detect, by using the optical proximity sensor 180G, that the user puts the electronic device close to an ear to make a call, to automatically perform screen-off is for power saving. The optical proximity sensor 180G may also be used in a smart cover mode or a pocket mode to automatically perform screen unlocking or locking.

The ambient light sensor 180L is configured to sense ambient light brightness. The electronic device may adaptively adjust brightness of the display 194 based on the sensed brightness of the ambient light. The ambient light sensor 180L may also be configured to automatically adjust a white balance during photographing. The ambient light sensor 180L may further cooperate with the optical proximity sensor 180G to detect whether the electronic device is in a pocket, to avoid an accidental touch.

The fingerprint sensor 180H is configured to collect a fingerprint. The electronic device may implement fingerprint-based unlocking, application lock access, fingerprint-based photographing, fingerprint-based call answering, and the like by using a feature of the captured fingerprint.

The temperature sensor 180J is configured to detect a temperature. In some embodiments, the electronic device executes a temperature processing policy by using the temperature detected by the temperature sensor 180J. For example, when the temperature reported by the temperature sensor 180J exceeds a threshold, the electronic device reduces performance of a processor near the temperature sensor 180J, to reduce power consumption and implement heat protection. In some other embodiments, when the temperature is lower than another threshold, the electronic device heats the battery 142, to avoid an abnormal shutdown of the electronic device caused by a low temperature. In some other embodiments, when the temperature is lower than still another threshold, the electronic device boosts an output voltage of the battery 142, to avoid an abnormal shutdown caused by a low temperature.

The touch sensor 180K is also referred to as a "touch panel". The touch sensor 180K may be disposed on the display 194, and the touch sensor 180K and the display 194 form a touchscreen. When the electronic device is an electronic device with a foldable screen, the touchscreen is the foldable screen (for example, a flexible foldable screen or a multi-screen foldable screen). The touch sensor 180K is configured to detect a touch operation performed on or near the touch sensor 180K. The touch sensor 180K may transmit the detected touch operation to the application processor, to determine a type of a touch event. A visual output related to the touch operation may be provided on the display 194. In other embodiments, the touch sensor 180K may alternatively be disposed on a surface of the electronic device at a location different from that of the display 194.

The bone conduction sensor 180M may obtain a vibration signal. In some embodiments, the bone conduction sensor 180M may obtain a vibration signal of a vibration bone of a human vocal part. The bone conduction sensor 180M may also be in contact with a human pulse to receive a blood pressure beating signal. In some embodiments, the bone conduction sensor 180M may alternatively be disposed in the headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device may receive a key input, and generate a key signal input related to a user setting and function control of the electronic device.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device. The electronic device may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may also be compatible with different types of SIM cards. The SIM card interface 195 may also be compatible with an external storage card. The electronic device interacts with a network by using the SIM card, to implement functions such as calling and data communication. In some embodiments, the electronic device uses an eSIM, namely, an embedded SIM card. The eSIM card may be embedded into the electronic device, and cannot be separated from the electronic device.

In addition, a software system of the electronic device may use a layered architecture, an event-driven architecture, a microcore architecture, a micro-service architecture, or a cloud architecture. In embodiments of this application, an Android system with a layered architecture is used as an example to describe a software structure of an electronic device.

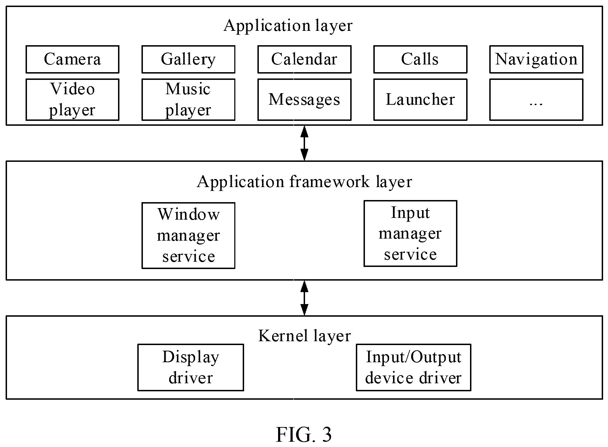

FIG. 3 is a schematic diagram of composition of a software architecture of an electronic device according to an embodiment of this application. In the layered architecture, software is divided into several layers, and each layer has a clear role and task. The layers communicate with each other through a software interface. In some embodiments, an Android system is divided into three layers: an application layer, an application framework layer (which may alternatively be referred to as a framework layer), and a kernel layer from top to bottom.

The application layer may include a series of application packages. As shown in FIG. 3, the application packages may include applications such as Camera, Gallery, Calendar, Calls, Navigation, Video Player, Music Player, Bluetooth, Messages, and Launcher (Launcher). For ease of description, an application is briefly described as an application below.

The application framework layer provides an application programming interface (application programming interface, API) and a programming framework for an application at the application layer. The application framework layer includes some predefined functions.

As shown in FIG. 3, the application framework layer may include a window manager service (window manager service, VMS) and an input manager service (input manager service, IMS). The application framework layer may further include an application manager, an application stack manager, an activity manager service (activity manager service, AMS), a content provider, a view system, a phone manager, a resource manager, a notification manager, and the like that are not shown in FIG. 3.

The window manager is configured to manage a window program. The window manager may obtain a size of a touchscreen of the electronic device, determine whether there is a status bar, lock a screen, take a screenshot, and the like.

The input event manager may be configured to perform processing such as translation and encapsulation on an original input event to obtain an input event that includes more information.

The kernel layer is a layer between hardware and software. The kernel layer may include a display driver and an input/output device driver (for example, an input device such as a keyboard, a touchscreen, a headset, a speaker, and a microphone). The kernel layer may further include a camera driver, an audio driver, a sensor driver, and the like that are not shown in FIG. 3. A user may input an operation by using an input device, and the kernel layer may generate a corresponding original input event based on the input operation, and transmit the original input event to the input event manager in the application framework layer.

For example, in this embodiment, after the user inputs the operation, for example, inputs a sliding operation on the touchscreen, the input/output device driver may detect the operation input by the user. The input/output device driver may convert the detected operation into a corresponding original input event, and transmit the original input event to the input event manager in the application framework layer. After receiving the original input event, the input event manager may convert the original input event into a corresponding input event that includes more information (or certainly may not perform conversion). The input event manager may transmit the input event to the launcher in the application layer. The launcher and the input event manager may analyze the input event, and identify a gesture corresponding to the input event. Then, the launcher and the window manager in the application framework layer invoke, based on the determined gesture, the display driver in the kernel layer to display a corresponding interface. For example, a plurality of windows are displayed, and different interfaces are displayed in different windows. For another example, when a plurality of windows are displayed, an interface in one of the windows is switched based on the gesture, for example, a previous-level interface of the current interface is displayed in a window, a task list interface is displayed, or a desktop is displayed.

The methods in the following embodiments may be implemented in an electronic device having the foregoing hardware structure and software architecture.

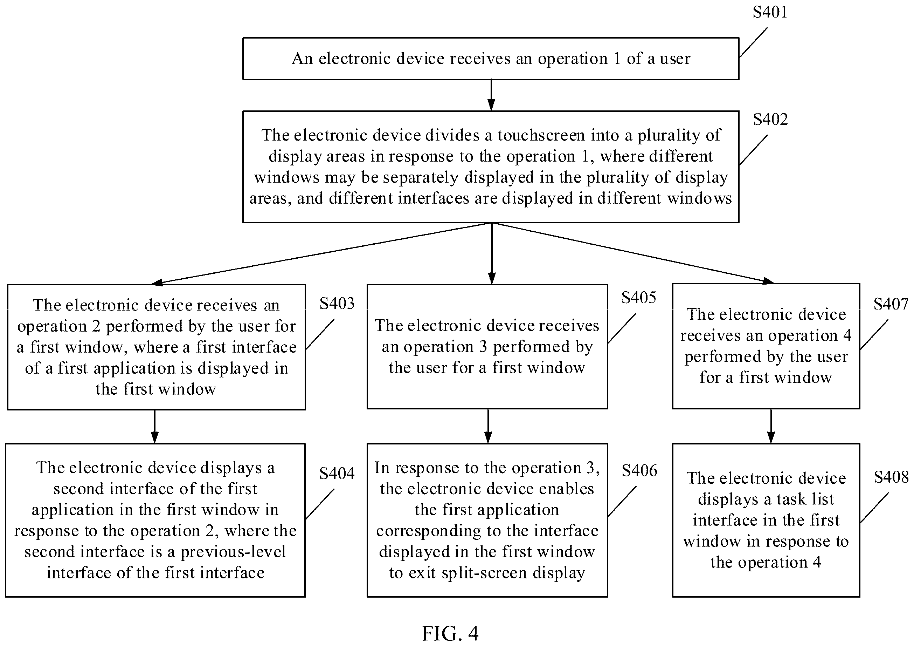

FIG. 4 is a schematic flowchart of an operation method for an electronic device according to an embodiment of this application. The method may be applied to an electronic device that supports a split-screen display function. During split-screen display, the electronic device may divide a touchscreen of the electronic device into a plurality of display areas. Different windows may be separately displayed in the plurality of display areas, and the electronic device may display different interfaces in different windows. In the following embodiment, the touchscreen is divided into two display areas as an example for description. As shown in FIG. 4, the method may include S401 to S408.

S401: The electronic device receives an operation 1 of a user.

The operation 1 may include one or more operations used to trigger split-screen display of the electronic device.

S402: The electronic device divides a touchscreen into a plurality of display areas in response to the operation 1, where different windows may be separately displayed in the plurality of display areas, and different interfaces are displayed in different windows.

After receiving the operation 1, the electronic device may divide the touchscreen into the plurality of display areas, and different windows may be separately displayed in the plurality of display areas. The electronic device may display different interfaces in different windows.

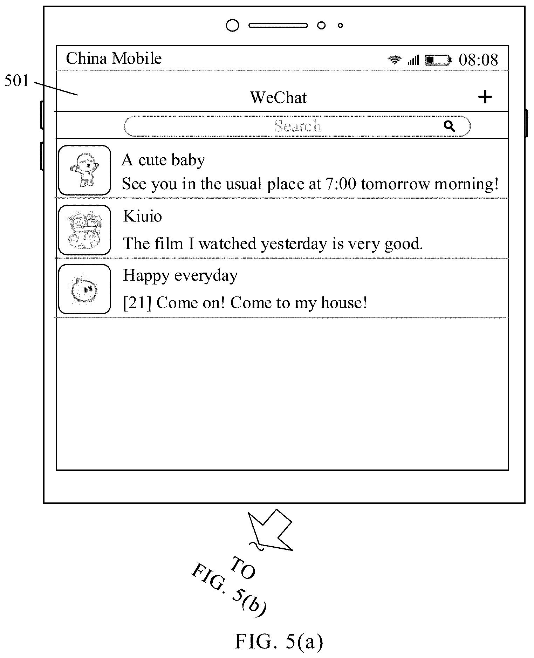

For example, as shown in FIG. 5(a), an interface 501 of WeChat is currently displayed on the touchscreen of the electronic device. When a user wants to use a split-screen display function, the user may perform a specific gesture, for example, sliding from an edge (for example, a left edge or a right edge) of the touchscreen to an inner side of the touchscreen, to trigger split-screen display of the electronic device. It may be understood that currently, the user may trigger, by performing a sliding operation of sliding from the left edge (or the right edge) of the touchscreen to the inner side of the touchscreen, the electronic device to display a previous-level interface of a current interface. In this embodiment, a sliding distance (for example, being referred to as a sliding distance 1) of the sliding operation for triggering split-screen display of the electronic device is different from a sliding distance (for example, being referred to as a sliding distance 2) of a sliding operation for triggering the electronic device to display the previous-level interface of the current interface. For example, the sliding distance 1 is greater than the sliding distance 2.

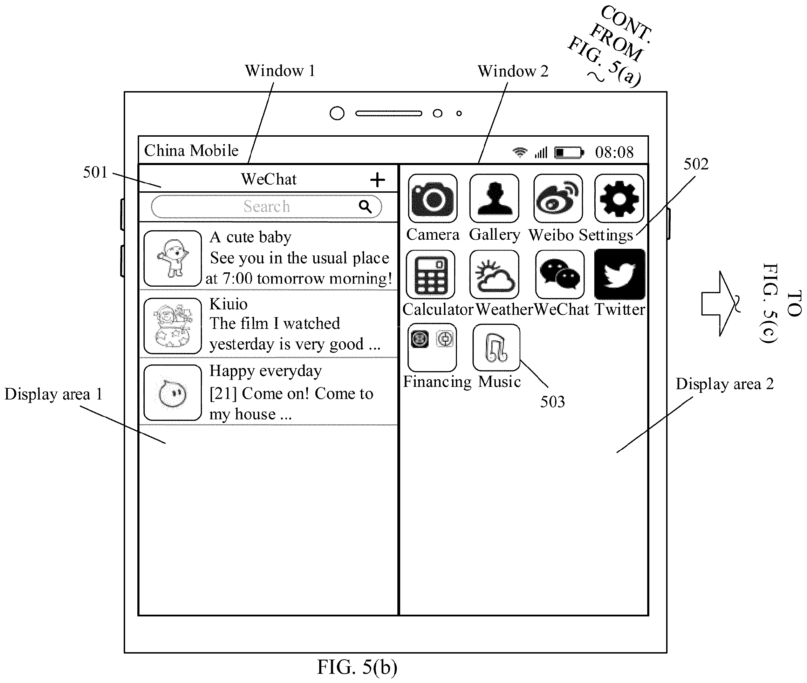

In response to the specific gesture, as shown in FIG. 5(b), the electronic device may divide the touchscreen into a plurality of display areas, for example, divide the touchscreen into two display areas: a display area 1 and a display area 2. Different windows may be separately displayed in the display area 1 and the display area 2. For example, a window 1 is displayed in the display area 1, and a window 2 is displayed in the display area 2. The electronic device displays the interface 501 of WeChat in one of the two windows. In some embodiments, the electronic device may select either of the two windows to display the interface 501 of WeChat. In some other embodiments, the electronic device may alternatively select, based on an edge on which a start point of the sliding operation performed by the user is located, one of the two windows to display the interface 501 of WeChat. If the edge on which the start point of the sliding operation is located is a left edge of the touchscreen, a left window, namely, the window 1, in the two windows is selected to display the interface 501 of WeChat (as shown in FIG. 5(b)). For another example, if the edge on which the start point of the sliding operation is located is a right edge of the touchscreen, a right window, namely, the window 2, in the two windows is selected to display the interface 501 of WeChat (not shown in the figure). In some other embodiments, the electronic device may alternatively select, based on a direction in which a finger slides when the user performs the sliding operation, one of the two windows to display the interface 501 of WeChat. If the finger slides leftwards when the user performs the sliding operation, a left window, namely, the window 1, in the two windows is selected to display the interface 501 of WeChat. For another example, if the finger slides rightwards when the user performs the sliding operation, a right window, namely, the window 2, in the two windows is selected to display the interface 501 of WeChat. As shown in FIG. 5(b), the electronic device may further display a desktop 502 in the other window such as the window 2 in the two windows. It may be seen that the interface 501 of WeChat and the desktop 502 are displayed on the touchscreen simultaneously. Therefore, split-screen display for an application interface and the desktop is implemented.

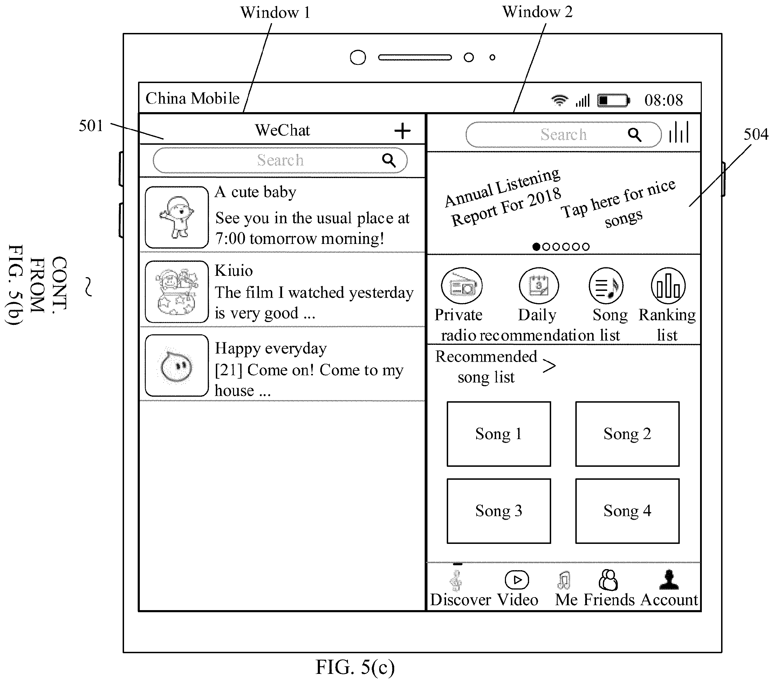

It may be understood that an icon of an application included in the electronic device may be displayed on the desktop 502. The user may further select another application from icons displayed on the desktop 502, and display the another application and WeChat on split screens. For example, as shown in FIG. 5(b), the desktop 502 includes an icon of "Camera", an icon of "Gallery", an icon of "Weibo", an icon of "Settings", an icon of "Calculator", an icon of "Weather", an icon of "WeChat", an icon 503 of "Music Player", and the like. For example, the user selects "Music Player". The user may perform a tapping operation on an icon 503 of "Music Player". In response to the tapping operation, as shown in FIG. 5(c), the electronic device may display an interface 504 of Music Player in the window 2, and the interface 501 of WeChat is still displayed in the window 1. It may be seen that the interface 503 of Music Player and the interface 501 of WeChat are simultaneously displayed on the touchscreen. Therefore, split-screen display of interfaces of different applications is implemented.

It may be understood that the foregoing example in FIG. 5(a), FIG. 5(b), and FIG. 5(c) is shown by using an example in which the electronic device divides the touchscreen into two display areas, two different windows are separately displayed in the two display areas, and two different interfaces are displayed in different windows. In some other embodiments, during split-screen display, the electronic device may alternatively divide the touchscreen into more than two display areas, different windows may be separately displayed in the more than two display areas, and the electronic device may display different interfaces in different windows, so that split-screen display of more than two different interfaces is implemented. In addition, the foregoing example is described by using an example in which an interface of an application is currently displayed on the touchscreen of the electronic device. In some embodiments, if the interface currently displayed on the touchscreen of the electronic device is a desktop, after receiving the operation 1, the electronic device may alternatively divide the touchscreen into a plurality of display areas, where different windows are separately displayed in the plurality of display areas; and the electronic device may display the desktop in one of the windows, and a fixed picture may be displayed in another window.

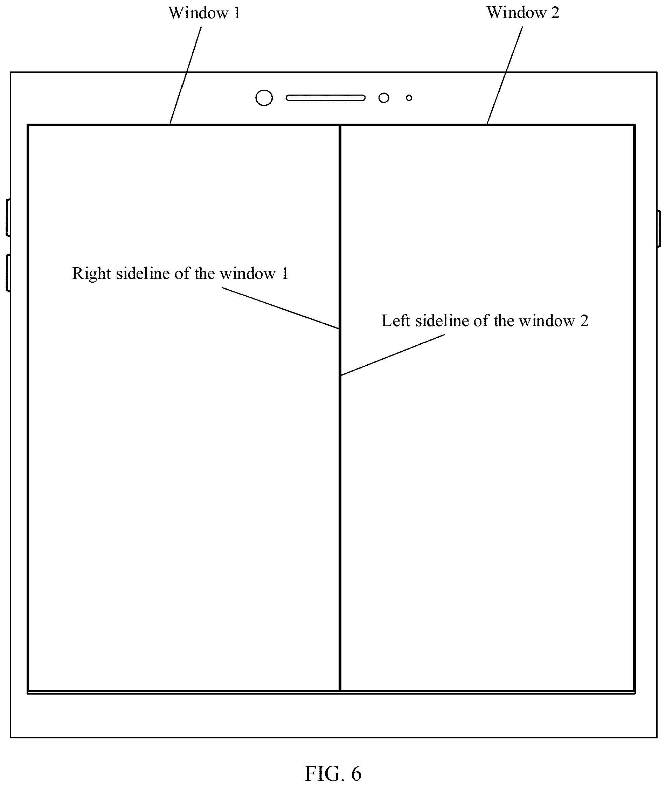

In some embodiments, the user may adjust a size of the window by dragging a sideline of the window, to adjust a size of an interface displayed in the window. For example, with reference to FIG. 6, the touchscreen of the electronic device is divided into two display areas in which different windows are separately displayed, for example, a window 1 and a window 2. The user may adjust a size of the window 1 by dragging a right sideline of the window 1 to the left or to the right, to adjust a size of an interface displayed in the window 1. It may be understood that the right sideline of the window 1 and a left sideline of the window 2 may be considered as overlapping or a same sideline. Therefore, when the user drags the right sideline of the window 1 to the left or to the right, it may be considered that the left sideline of the window 2 is also correspondingly dragged. In this case, a size of the window 2 also changes accordingly, so that a size of an interface displayed in the window 2 can be adjusted. It should be noted that the sideline may be displayed on the touchscreen after the electronic device divides the touchscreen into a plurality of display areas, or may be displayed on the touchscreen only when the user touches a window edge and is automatically hidden when the user stops touching. This is not specifically limited in this embodiment.

It should be noted that the operation 1 is not limited to a gesture in the example shown in FIG. 5(a), FIG. 5(b), and FIG. 5(c), or may be another operation used to trigger split-screen display of the electronic device. This is not specifically limited in this embodiment.

In this embodiment, during split-screen display, the user may perform a corresponding operation for a single window, to trigger the electronic device to execute a corresponding event for the window, for example, execute an event of returning to a previous-level interface for an interface displayed in the window, execute an event of exiting split-screen display for an application corresponding to the interface displayed in the window, or execute an event of displaying a task list interface in the window.

The electronic device may execute different events in response to different operations. It should be noted that, in embodiments, corresponding events to be executed by the electronic device in response to different operations performed by the user may be predefined or preconfigured in the electronic device, or may be set by the user. In other words, corresponding events to be executed by the electronic device when triggered by different operations may be predefined, or may be set by the user. If the corresponding events to be executed by the electronic device when triggered by different operations are predefined or preconfigured in the electronic device, the electronic device may display prompt information (for example, may be displayed when the electronic device starts split-screen display, or may be displayed when the user enables a split-screen display function of the electronic device) that is used to notify the user that the electronic device may be triggered to perform corresponding events when different operations are performed. If the corresponding events to be executed by the electronic device when triggered by different operations are set by the user, a setting interface may be provided for the user to set corresponding events executed by the electronic device when triggered by different operations.

For example, events executed by the electronic device based on different operations performed by the user are described in S403 to S408.

In some embodiments, when the electronic device receives an operation 2 performed by the user for the first window, the electronic device may execute, for an interface displayed in the first window, an event of returning to a previous-level interface. For details, refer to S403 and S404.

S403: The electronic device receives the operation 2 performed by the user for the first window, where a first interface of a first application is displayed in the first window.

The first window may be any one of the plurality of windows in S402. For example, with reference to FIG. 5(a), FIG. 5(b), and FIG. 5(c) or FIG. 6, the first window may be the window 1 or the window 2. The operation 2 may be an operation for triggering the electronic device to execute, for an interface displayed in a corresponding window (for example, the window 1), an event of returning to a previous-level interface. The first operation in this application may be the operation 2.

For example, the operation 2 may be a sliding operation. For example, the operation 2 may be a sliding operation 1. A start point of the sliding operation 1 is a first side of the first window, a sliding direction is away from the first side, and duration is less than or equal to first preset duration. A value range of the first preset duration may be [100 milliseconds (ms), 600 ms]. For example, the first preset duration is 200 ms. For another example, the operation 2 may be a sliding operation 2. A start point of the sliding operation 2 is a first side of the first window, a sliding direction is away from the first side, and a sliding distance is less than or equal to a first preset distance. A value range of the first preset distance may be [1 centimeter (cm), 6 cm]. For still another example, the operation 2 may be a sliding operation 3. A start point of the sliding operation 3 is a first side of the first window, a sliding direction is away from the first side, and a sliding direction is a first preset direction. For example, an included angle between the first preset direction and the first side falls within a range of [45°, 135°]. In this embodiment, the sliding operation 1, the sliding operation 2, and the sliding operation 3 may all be the first sliding operation in this application.

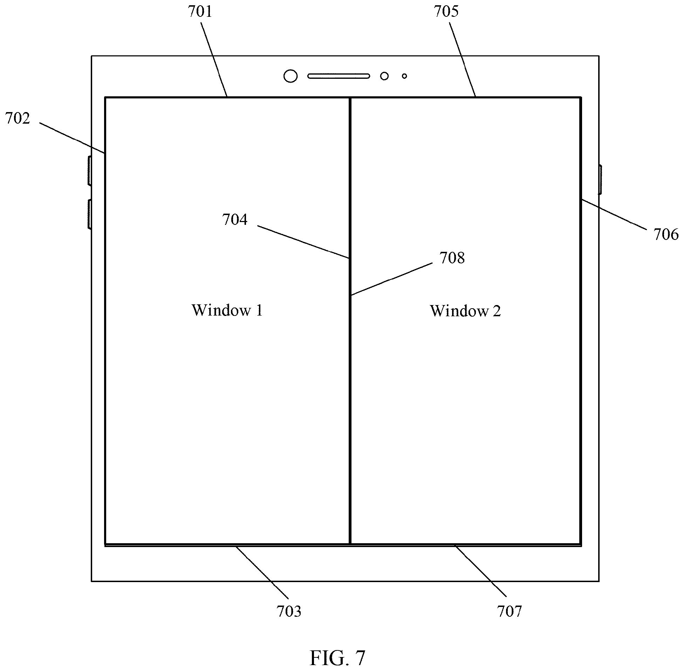

It should be noted that the first side of the first window is a side that is of the first window and that is closely adjacent to an edge of the touchscreen, or a side that is of the first window and that is closely adjacent to another window. For example, with reference to FIG. 6, as shown in FIG. 7, the first side of the first window is described. When the first window is a window 1 shown in FIG. 7, the first side of the first window may be a side 701, a side 702, or a side 703. Alternatively, the first side of the first window may be a side 704. When the first window is a window 2 shown in FIG. 7, the first side of the first window may be a side 705, a side 706, or a side 707. Alternatively, the first side of the first window may be a side 708. It may be understood that, because the window 1 is adjacent to the window 2, the side 704 and the side 708 may be considered as a same sideline. When the first side of the first window is a side closely adjacent to another window, that the sliding direction is away from the first side means that the sliding direction points to an inner side of the first window. For example, as shown in FIG. 7, the first window is the window 1, and the first side is the side 704. That the sliding direction is away from the first side means that the sliding direction points to an inner side of the window 1, or that the sliding direction points to a side that is of the window 1 and that is opposite to the first side, for example, pointing to the side 702. For another example, as shown in FIG. 7, the first window is the window 2, and the first side is the side 708. That the sliding direction is away from the first side means that the sliding direction points to an inner side of the window 2, or that the sliding direction points to a side that is of the window 2 and that is opposite to the first side, for example, pointing to the side 706.

It should be noted that the operation 2 may alternatively be another operation used to trigger the electronic device to execute, for an interface displayed in a corresponding window, an event of returning to a previous-level interface, for example, a double tapping operation in the first window. This is not specifically limited in this embodiment. In addition, the operation 2 may be performed by one or more fingers, and this is not specifically limited in this embodiment.

S404: The electronic device displays a second interface of the first application in the first window in response to the operation 2. The second interface is a previous-level interface of the first interface.

After the electronic device receives the operation 2 performed by the user for the first window, in response to the operation 2, the electronic device may execute a corresponding event for the interface displayed in the first window, for example, return the interface that is of the first application and that is displayed in the first window to a previous level, and an interface displayed in the other window remains unchanged.

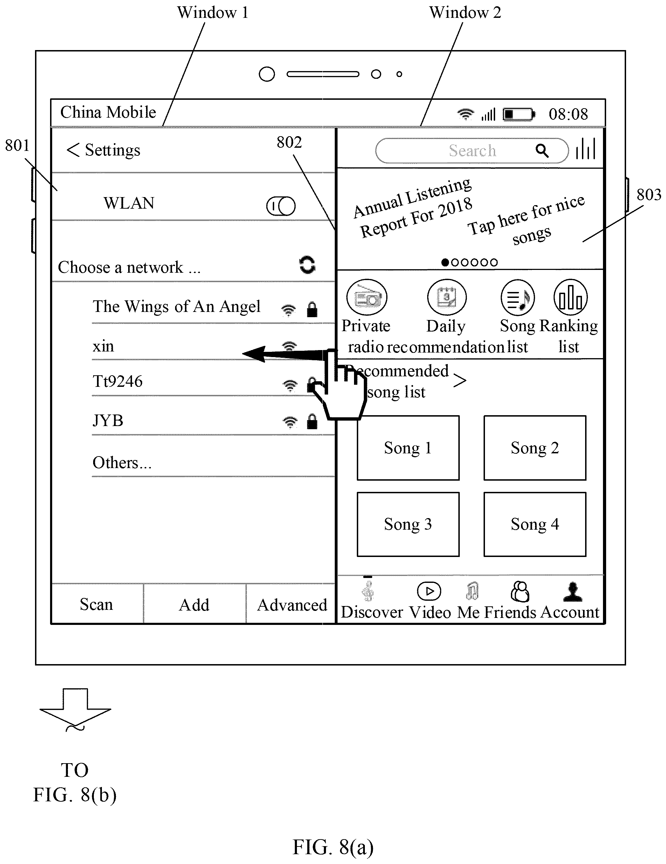

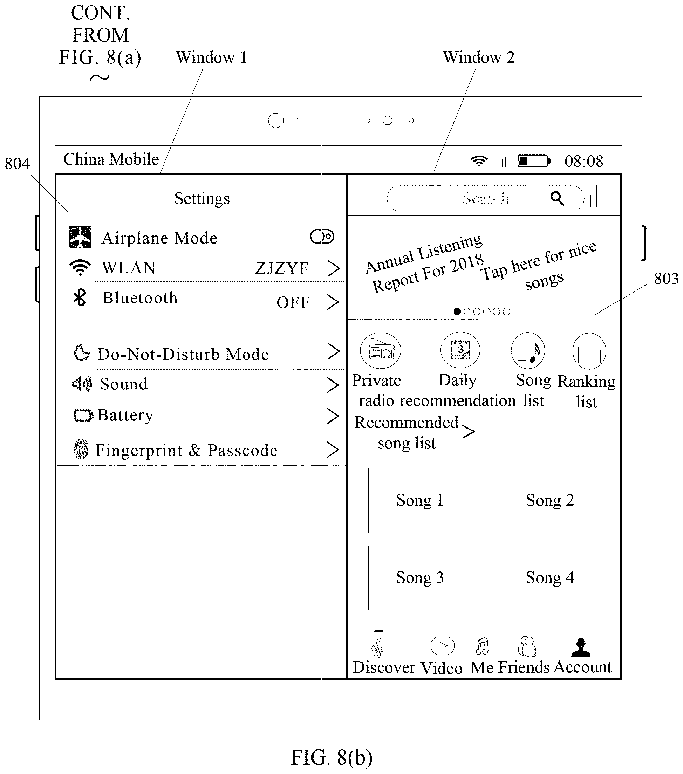

For example, with reference to FIG. 7, the first window is the window 1, and the operation 2 is performed by one finger. The operation 2 is the sliding operation 1, the first preset duration is 200 ms, and the first side is a side that is of the first window and that is closely adjacent to another window. A first interface of Settings is currently displayed in the window 1 of the touchscreen of the electronic device, for example, a setting interface 801 of WLAN shown in FIG. 8(a), and an interface 803 of Music Player is displayed in the window 2. When the user wants to return from the interface displayed in the window 1 to a previous-level interface, as shown in FIG. 8(a), the user may perform the operation 2 for the window 1. To be specific, the user may perform, in a direction away from a side 802 (or in a direction towards an inner side of the window 1) by using a single finger, a sliding operation from the side 802 that is of the window 1 and that is closely adjacent to the window 2, and leave the touchscreen within 200 ms. In response to the operation 2, as shown in FIG. 8(b), the electronic device may display, in the window 1, a second interface of the application Settings, for example, a home screen 804 of the application Settings. In other words, when the electronic device detects that the user's finger slides into the window 1 from the side that is of the window 1 and that is closely adjacent to the window 2, and leaves the touchscreen within 200 ms, as a response, the electronic device may execute, for the application Settings displayed in the window 1, an event of returning to a previous-level display interface. For another window, if an interface displayed in the window 2 remains unchanged, for example, as shown in FIG. 8(a) and FIG. 8(b), the interface 803 of Music Player is displayed in the window 2. In addition, in some embodiments, a time point at which the electronic device executes, for the interface displayed in the window 1, the event of returning to the previous-level display interface may be a moment at which the user's finger leaves the touchscreen.

Alternatively, when the first interface is an initial interface of the first application, S404 may be replaced with the following: In response to the operation 2, the electronic device enables the application displayed in the window 1 to exit split-screen display. In other words, if an initial interface of an application is displayed in the window, because the initial interface does not have a previous-level interface, after the user performs the operation 2 in the window, in response to the operation 2, the electronic device may enable the application displayed in the window to exit split-screen display, that is, does not display an interface of the application on the touchscreen any longer. Alternatively, when an initial interface of an application is displayed in the window, if the operation 2 performed by the user for the window is received, the electronic device may display prompt information in response to the operation 2, and the prompt information is used to notify the user that the application displayed in the window is to exit split-screen display. An OK button and a Cancel button may be further displayed. When a tapping operation performed by the user for the OK button is received, the application displayed in the window exits split-screen display. If a tapping operation performed by the user for the Cancel button is received, the initial interface of the application is still displayed in the window. In some embodiments, after enabling an application displayed in a corresponding window to exit split-screen display, the electronic device may display a desktop in the window. In other words, the desktop displayed in the window and an interface displayed in another window are simultaneously displayed on the touchscreen. If the interface displayed in the another window is also the desktop, the electronic device may exit split-screen display, that is, display the desktop in full screen. In some other embodiments, after enabling an application displayed in a corresponding window to exit split-screen display, the electronic device may alternatively not display the window on the touchscreen any longer, and may adaptively adjust a size of another window, for example, increase the size of the another window, so that interfaces displayed in all other windows can match a size of the touchscreen. If only two windows are displayed on the touchscreen, an interface in a window is displayed in full screen after an application displayed in the other window exits split-screen display.

The example shown in FIG. 8(a) and FIG. 8(b) is described by using an example in which the first side is a side that is of the first window and that is closely adjacent to another window. In some other embodiments, as described above, the first side may alternatively be a side that is of the first window and that is closely adjacent to the edge of the touchscreen. Similarly, after the electronic device receives, for example, a sliding operation, performed by the user for the first window, in which a start point is the side that is of the first window and that is closely adjacent to the edge of the touchscreen and a sliding direction is away from the side (or the sliding direction point to an inner side of the first window), in response to the operation, the electronic device may alternatively execute a corresponding event for the interface displayed in the first window, for example, returning from the interface of the first application displayed in the first window to a previous level, and an interface displayed in another window remains unchanged. Specific descriptions are similar to the descriptions in the example shown in FIG. 8(a) and FIG. 8(b), and details are not described herein again.

It should be noted that in this embodiment, the event executed by the electronic device in response to the operation 2 performed by the user is not limited to the foregoing event of returning to the previous-level interface. In some embodiments, the event executed by the electronic device in response to the operation 2 when the user performs the operation 2 for the first window may be the same as and certainly different from an event executed by the electronic device after the user performs a tapping operation on a Back (back) button in a navigation bar when the electronic device is not in split-screen display.

In some other embodiments, when the electronic device receives an operation 3 performed by the user for the first window, the electronic device may execute, for the application corresponding to the interface displayed in the first window, an event of exiting split-screen display. For details, refer to S405 and S406.

S405: The electronic device receives the operation 3 performed by the user for the first window.

The operation 3 may be an operation for triggering the electronic device to enable an application corresponding to an interface displayed in a corresponding window (for example, the first window) to exit split-screen display. The second operation in this application may be the operation 3.

For example, the operation 3 may be a sliding operation. For example, the operation 3 may be a sliding operation 4. Both a start point and an end point of the sliding operation 4 are a second side of the first window, a sliding direction is first away from the second side and then towards the second side, and duration of sliding in a direction away from the second side is less than or equal to second preset duration. For example, a value of the second preset duration may be [100 ms, 600 ms]. The value of the second preset duration may be the same as that of the first preset duration in S403. For example, the second preset duration is also 200 ms. For another example, the operation 3 may be a sliding operation 5. Both a start point and an end point of the sliding operation 5 are a second side of the first window, a sliding direction is first away from the second side and then towards the second side, and a sliding distance in a direction away from the second side is less than or equal to a second preset distance. A value range of the second preset distance may be [1 cm, 6 cm]. A value of the second preset distance may be the same as that of the first preset distance in S403. For still another example, the operation 3 may be a sliding operation 6. A start point of the sliding operation 6 is a second side of the first window, a sliding direction is away from the second side, a sliding direction is a second preset direction, and the second preset direction is different from the first preset direction in S403. For example, an included angle between the second preset direction and the second side falls within a range of [0°, 45°). For descriptions of the second side of the first window, refer to the descriptions of the first side in S403. Details are not described herein again. In addition, the second side may be the same as or different from the first side in S403. If the second side is different from the first side, the operation 3 may alternatively be a sliding operation in which a start point is the second side of the first window, a sliding direction is away from the second side, and duration is less than or equal to first preset duration, a sliding operation in which a start point is the second side of the first window, a sliding direction is away from the second side, and a sliding distance is less than or equal to a first preset distance, or a sliding operation in which a start point is the second side of the first window, a sliding direction is away from the second side, and an included angle between the sliding direction and the second side is in a range [45°, 135°]. In this embodiment, both the sliding operation 4 and the sliding operation 5 may be the second sliding operation in this application. In addition, in this embodiment, the operation 3 may alternatively be a sliding operation 4' in which a start point is the second side of the first window, a sliding direction is away from the second side, and duration is greater than first preset duration, or a sliding operation 5' in which a start point is the second side of the first window, a sliding direction is away from the second side, and a sliding distance is greater than a first preset distance. In this embodiment, the sliding operation 4', the sliding operation 5', and the sliding operation 6 may all be the third sliding operation in this application.

It should be noted that the operation 3 may alternatively be another operation used to trigger the electronic device to execute, for an application corresponding to an interface displayed in a corresponding window, an event of exiting split-screen display, for example, a touch and hold operation in the first window. The operation 3 is different from the operation 2 in S403. This is not specifically limited in this embodiment. In addition, the operation 3 may be performed by one or more fingers, and this is not specifically limited in this embodiment.

S406: In response to the operation 3, the electronic device enables a first application corresponding to an interface displayed in the first window to exit split-screen display.

After the electronic device receives the operation 3 performed by the user for the first window, in response to the operation 3, the electronic device may execute a corresponding event for an application such as the first application corresponding to the interface displayed in the first window, for example, enable the first application to exit split-screen display, and an interface displayed in another window remains unchanged.

That the application exits split-screen display means that the interface of the application is no longer displayed in an interface in which a plurality of windows are displayed on split screens. For example, after receiving the operation 3 performed by the user for the first window, the electronic device may enable the first application corresponding to the interface displayed in the first window to exit split-screen display, that is, stop displaying the interface of the first application on the touchscreen. For example, the electronic device may switch the first application to the background for running, to stop displaying the first application on the touchscreen. For another example, the electronic device may directly enable the first application to exit running, to stop displaying the first application on the touchscreen. In addition, in some embodiments, after the first application corresponding to the interface displayed in the first window exits split-screen display, the electronic device may display a desktop in the first window, and an interface displayed in another window remains unchanged. If the interface displayed in the another window is also the desktop, the electronic device may exit split-screen display, that is, display the desktop in full screen. In some other embodiments, the electronic device may alternatively adaptively adjust a size of the another window after enabling the first application corresponding to the interface displayed in the first window to exit split-screen display, for example, increase the size of the another window, so that applications displayed in all other windows can match a size of the touchscreen, and the interface displayed in the another window remains unchanged.

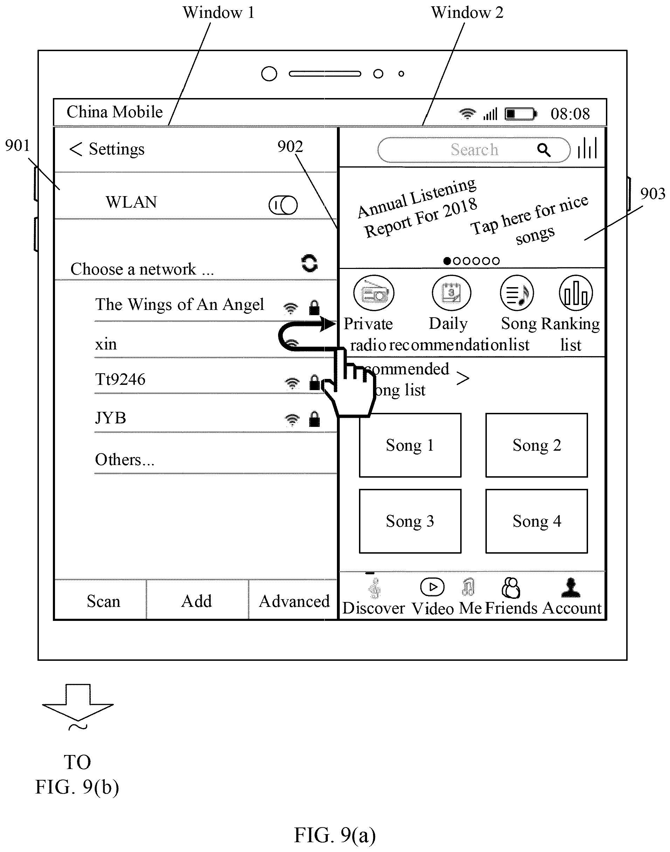

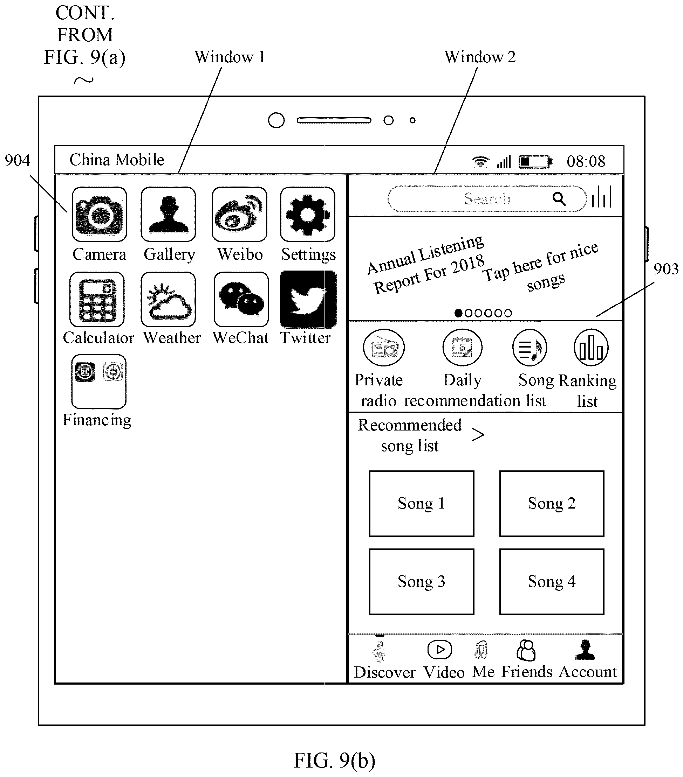

For example, with reference to FIG. 7, the first window is the window 1, the operation 3 is performed by one finger, the operation 3 is the sliding operation 4, the second preset duration is 200 ms, and the second side is the same as the first side and is a side that is of the first window and that is closely adjacent to another window. An interface of an application Settings is currently displayed in the window 1 of the touchscreen of the electronic device, for example, a setting interface 901 of WLAN in an application Settings shown in FIG. 9(a), and an interface 903 of Music Player is currently displayed in the window 2. When the user wants to enable the application Settings to exit split-screen display, as shown in FIG. 9(a), the user may perform the operation 3 for the window 1. To be specific, the user may slide, by using a single finger first in a direction away from a side 902 (or in a direction pointing to an inner side of the window 1), from the side 902 that is of the window 1 and that is closely adjacent to the window 2, and slide in a direction towards the side 902 within 200 ms until sliding out of the side 902. In response to the operation 3, the electronic device may enable the application Settings corresponding to the interface displayed in the window 1 to exit split-screen display. To be specific, as shown in FIG. 9(b), the electronic device stops displaying the interface of the application Settings on the touchscreen, and displays a desktop 904 in the window 1, and the interface 903 of Music Player is still displayed in the window 2. In other words, when the electronic device detects that the user's finger slides into the window 1 from the side that is of the window 1 and that is closely adjacent to the window 2, and slides out of the window 1 in an opposite direction within 200 ms, as a response, the electronic device may execute, for the application Settings corresponding to the interface displayed in the window 1, the event of exiting split-screen display, but does not execute, for an application corresponding to an interface displayed in another window such as the window 2, the event of exiting split-screen display. In addition, in some embodiments, a time point at which the electronic device executes, for the first application corresponding to the interface displayed in the first window, the event of exiting split-screen display may be a moment at which the user's finger slides out of an edge of the window 1.

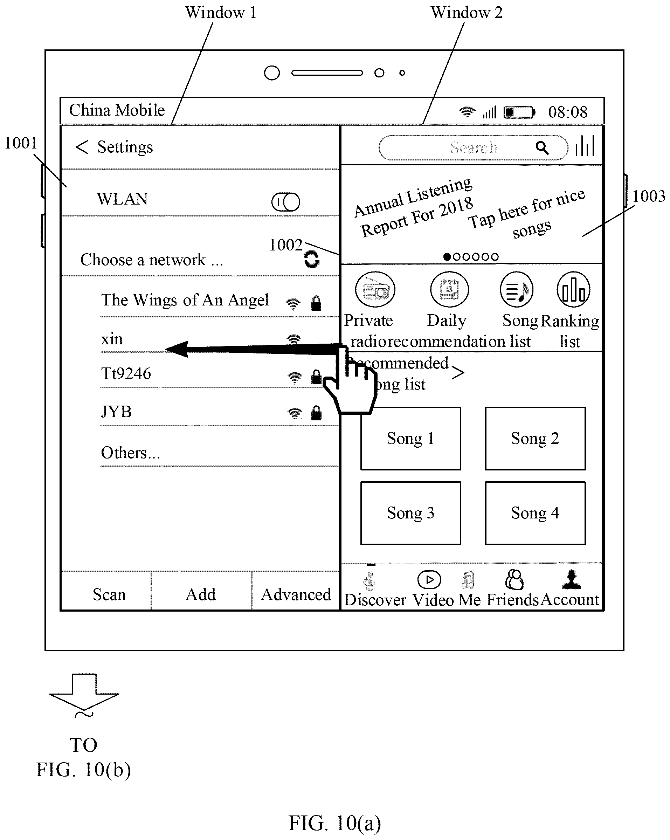

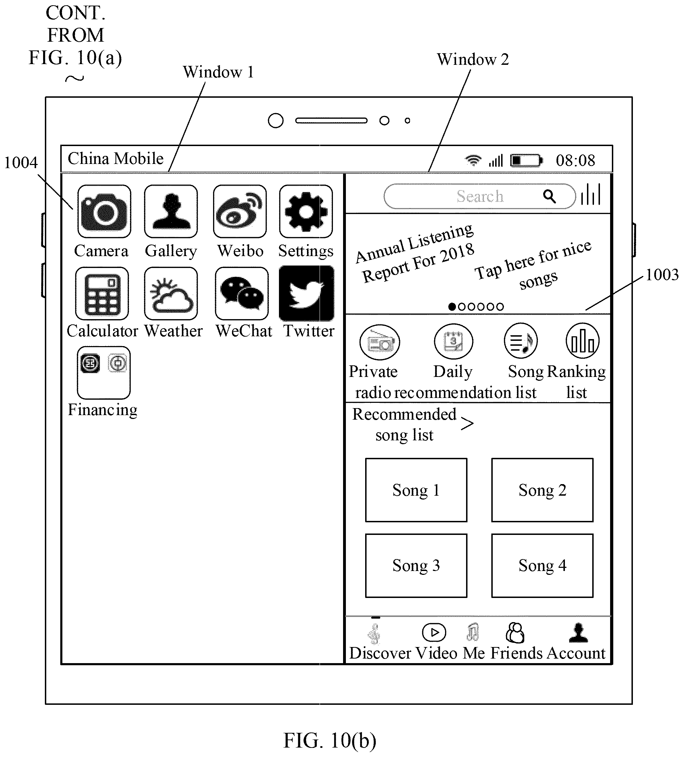

For another example, with reference to FIG. 7, the first window is the window 1, the operation 3 is performed by one finger, the operation 3 is a sliding operation in which a start point is the second side of the first window, a sliding direction is away from the second side, and a sliding distance is greater than a preset distance, the preset distance is 2 cm, and the second side is a side that is of the first window and that is closely adjacent to another window. An interface of an application Settings is currently displayed in the window 1 of the touchscreen of the electronic device, for example, a setting interface 1001 of WLAN in an application Settings shown in FIG. 10(a), and an interface 1003 of Music Player is currently displayed in the window 2. When the user wants to enable the application Settings to exit split-screen display, as shown in FIG. 10(a), the user may perform the operation 3 for the window 1. To be specific, the user may perform, in a direction away from a side 1002 (or in a direction towards an inner side of the window 1) by using a single finger, a sliding operation from the side 1002 that is of the window 1 and that is closely adjacent to the window 2, and leave the touchscreen after sliding by 2 cm. In response to the operation 3, the electronic device may enable the application Settings corresponding to the interface displayed in the window 1 to exit split-screen display. To be specific, as shown in FIG. 10(b), the electronic device stops displaying the interface of the application Settings on the touchscreen, and displays a desktop 1004 in the window 1, and the interface 1003 of Music Player is still displayed in the window 2. In other words, when the electronic device detects that the user's finger slides into the window 1 from a side that is of the window 1 and that is closely adjacent to another window and leaves the touchscreen after sliding over 2 cm, as a response, the electronic device may execute, for the application Settings corresponding to the interface displayed in the window 1, an event of exiting split-screen display, but does not execute, for an application corresponding to an interface displayed in another window such as the window 2, the event of exiting split-screen display. In addition, in some embodiments, a time point at which the electronic device executes, for the first application corresponding to the interface displayed in the first window, the event of exiting split-screen display may be a moment at which the user's finger leaves the touchscreen.

It should be noted that in this embodiment, the event executed by the electronic device in response to the operation 3 performed by the user is not limited to the foregoing event of exiting split-screen display. In some embodiments, the event executed by the electronic device in response to the operation 3 when the user performs the operation 3 for the first window may be the same as and certainly different from an event executed by the electronic device after the user performs a tapping operation on a Home (Home) button in a navigation bar when the electronic device is not in split-screen display.

In some other embodiments, when the electronic device receives an operation 4 performed by the user for the first window, the electronic device may display a task list interface in the first window. For details, refer to S407 and S408.

S407: The electronic device receives the operation 4 performed by the user for the first window.

The operation 4 may be an operation for triggering the electronic device to display the task list interface in a corresponding window (for example, the first window). The third operation in this embodiment may be the operation 4.

For example, the operation 4 may be a sliding operation. For example, the operation 4 may be a sliding operation 7. A start point of the sliding operation 7 is a third side of the first window, a sliding direction is away from the third side, and duration is greater than third preset duration. Alternatively, a start point of the sliding operation 7 is a third side of the first window, a sliding direction is away from the third side, duration is greater than third preset duration, and there is a pause of predetermined duration after sliding. To be specific, the electronic device first detects a sliding operation, and continuously detects a touch and hold operation. For example, a value range of the third preset duration may be [100 ms, 600 ms]. A value of the third preset duration may be the same as that of the first preset duration in S403. For example, the third preset duration is 200 ms. For another example, the operation 4 may be a sliding operation 8. A start point of the sliding operation 8 is a third side of the first window, a sliding direction is away from the third side, and a sliding distance is greater than a third preset distance. Alternatively, a start point of the sliding operation 8 is a third side of the first window, a sliding direction is away from the third side, a sliding distance is greater than a third preset distance, and there is a pause of predetermined duration after sliding. A value range of the third preset distance may be [1 cm, 6 cm]. A value of the third preset distance may be the same as that of the first preset distance in S403. For still another example, the operation 4 may be a sliding operation 9. A start point of the sliding operation 9 is a third side of the first window, a sliding direction is away from the third side, and the sliding direction is a third preset direction. The third preset direction is different from both the first preset direction in S403 and the second preset direction in S405. For example, an included angle between the third preset direction and the first side falls within a range of (135°, 180°]. For descriptions of the third side of the first window, refer to the descriptions of the first side in S403. Details are not described herein again. In addition, the third side may be the same as or different from the first side in S403 and the second side in S405. In this embodiment, the sliding operation 7, the sliding operation 8, and the sliding operation 9 may all be the fourth sliding operation in this application.

It should be noted that the operation 4 may alternatively be another operation used to trigger the electronic device to execute the event of displaying the task list interface in a corresponding window. The operation 4 is different from the operation 2 in S403 and the operation 3 in S405. This is not specifically limited in this embodiment. In addition, the operation 4 may be performed by one or more fingers, and this is not specifically limited in this embodiment.

S408: The electronic device displays the task list interface in the first window in response to the operation 4.

After the electronic device receives the operation 4 performed by the user for the first window, in response to the operation 4, the electronic device may execute a corresponding event for the first window, for example, display the task list interface in the first window, and an interface displayed in another window remains unchanged. In some embodiments, the task list interface may include an identifier of an application run by the electronic device in the background or an application recently run by the electronic device. When triggering the identifier (for example, tapping the identifier), the user may switch the application corresponding to the identifier to the foreground for display. In some other embodiments, the task list interface may include at least one of the following application identifier combinations: a combination of application identifiers that have been recently displayed on split screens on the touchscreen of the electronic device, a combination of predefined application identifiers displayed on split screens, and a combination of application identifiers displayed on split screens and determined by the electronic device based on a use habit (for example, often triggering the electronic device to display interfaces of some applications in a split-screen display manner). When the user triggers a combination of the application identifiers (for example, tapping the combination of the identifiers), all applications corresponding to the combination of the identifiers may be switched to the foreground for display in the split-screen display form. The combination of the application identifiers that have been recently displayed on split screens on the touchscreen of the electronic device may include a combination of application identifiers currently displayed on split screens on the touchscreen, or may not include the combination of application identifiers currently displayed on split screens on the touchscreen.

In combinations of application identifiers included in the task list interface, a quantity of application identifiers included in different combinations of application identifiers may be the same, or may be different. If the combination of the application identifiers is a combination of the application identifiers that have been recently displayed on the touchscreen of the electronic device, or a combination of the application identifiers that are displayed on split screens and that are determined based on the use habit of the user, a quantity of application identifiers included in the combination of the application identifiers is the same as a quantity of applications that are previously displayed on split screens. If the combination of the application identifiers is the combination of predefined application identifiers displayed on split screens, a quantity of application identifiers included in the combination of the application identifiers is the same as a quantity of defined applications displayed on split screens. The foregoing identifier may be a screenshot of an interface last displayed when a corresponding application exits foreground running, an icon of the application, or the like.

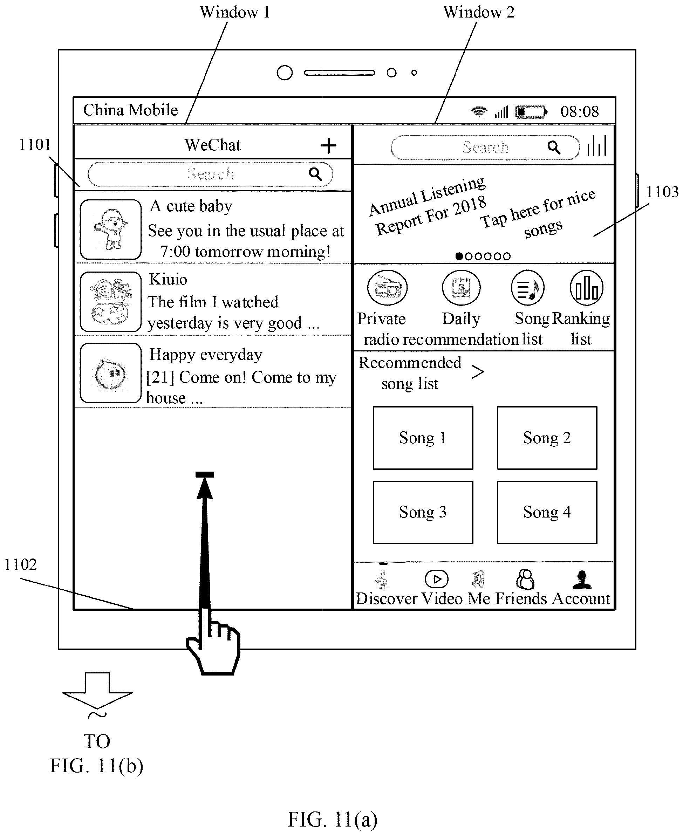

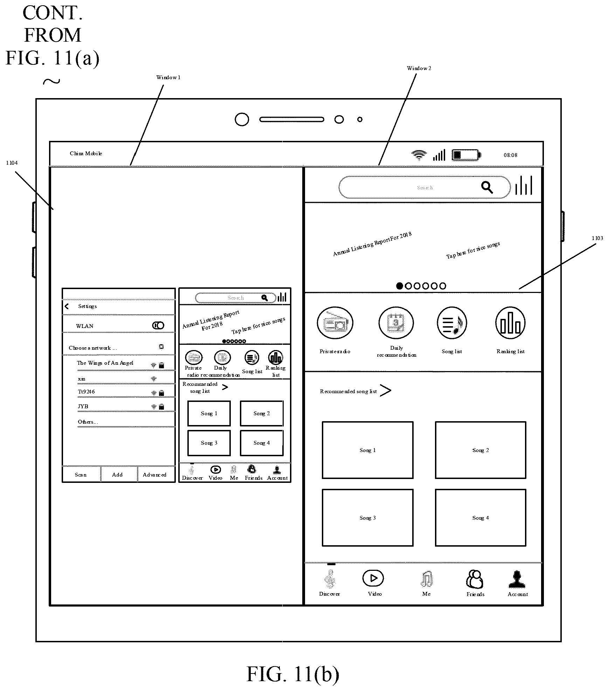

For example, with reference to FIG. 7, the first window is the window 1, the operation 4 is performed by one finger, the operation 4 is the sliding operation 7, the third preset duration is 200 ms, the third side is a side that is of the first window and that is closely adjacent to the touchscreen, and the task list interface includes the combination of the application identifiers. As shown in FIG. 11(a), an interface 1101 of WeChat is currently displayed in a window 1 of the touchscreen of the electronic device, and an interface 1103 of Music Player is currently displayed in a window 2. When the user wants to display the task list interface in the window 1, as shown in FIG. 11(a), the user may perform the operation 4 for the window 1. To be specific, the user performs, in a direction away from a side 1102 by using a single finger, a sliding operation from the side 1102 that is of the window 1 and that is closely adjacent to an edge of the window 1, and sliding duration exceeds 200 ms, and does not immediately lift the finger after sliding, but pauses for predetermined duration before lifting the finger. In response to the operation 4, as shown in FIG. 11(b), the electronic device may display a task list interface 1104 in the window 1. The task list interface includes a combination of screenshots of interfaces of applications that have been recently displayed on split screens on the touchscreen of the electronic device. For example, the user has recently displayed an application Settings and Music Player on split screens on the touchscreen. As shown in FIG. 11(b), the task list interface 1104 includes a combination of a screenshot of an interface displayed when the application Settings exits foreground running and a screenshot of an interface displayed when Music Player exits foreground running. To be specific, when the electronic device detects that the user's finger slides in from a side that is of the window 1 and that is closely adjacent to an edge of the touchscreen, sliding duration is greater than 200 ms, the finger is not immediately lifted after sliding, but is lifted after pausing for the predetermined duration, as a response, the electronic device may execute an event of displaying the task list interface in the window 1. The user may switch, by triggering a combination of application identifiers (for example, tapping the combination of the identifiers), all applications corresponding to the combination of the identifiers to the foreground for display in a split-screen display form. In other words, if the user performs a tapping operation on the combination of the application identifiers displayed in the task list interface 1104, in response to the operation, the electronic device displays a setting interface of WLAN in the window 1, and displays the interface of Music Player in the window 2. In addition, in some embodiments, a time point at which the electronic device executes the event of displaying the task list interface in the window 1 may be a moment at which the user's finger leaves the touchscreen.

It should be noted that, in the example shown in FIG. 11(a) and FIG. 11(b), a combination of a group of application identifiers included in the task list interface is used as an example. The combination of the application identifiers included in the task list interface may alternatively have a plurality of groups. This embodiment of this application sets no specific limitation on a quantity of combinations of application identifiers included in the task list interface. If the task list interface includes combinations of a plurality of groups of application identifiers, the user may select one group from the plurality of groups to switch corresponding applications to the foreground for display in a split-screen display form. In some embodiments, in the example corresponding to FIG. 11(a) and FIG. 11(b), the task list interface may not include a combination of application identifiers currently displayed on split screens on the touchscreen (for example, does not include a combination of WeChat and Music Player shown in FIG. 11(a)), but includes at least one of the following application identifier combinations: a combination of application identifiers previously displayed on split screens on the touchscreen, a combination of application identifiers predefined by the user and displayed on split screens, and a combination of application identifiers displayed on split screens and determined by the electronic device based on a use habit of the user. In this way, it can be convenient for the user to switch another application combination to the foreground for display. In addition, in this embodiment, the event executed by the electronic device in response to the operation 4 performed by the user is not limited to the foregoing event of displaying the task list interface. In some embodiments, the event executed by the electronic device in response to the operation 4 when the user performs the operation 4 for the first window may be the same as and certainly different from an event executed by the electronic device after the user performs a tapping operation on a Recent (Recent) button in a navigation bar when the electronic device is not in split-screen display.

In some other embodiments, during split-screen display, if the user performs the operation 4 for different windows by using different fingers (in this scenario, the operation 4 may be the fifth operation in this application), in response to the operation 4, the electronic device may display the task list interface in full screen, or switch interfaces in these windows to the background, combine these windows into one window, and display the task list interface in the window obtained after combination, and an interface displayed in another window remains unchanged. When the user performs the operation 4 for all windows by using different fingers, the electronic device may display the task list interface in full screen in response to the operation 4. During split-screen display, all interfaces displayed in the windows are switched to the background.

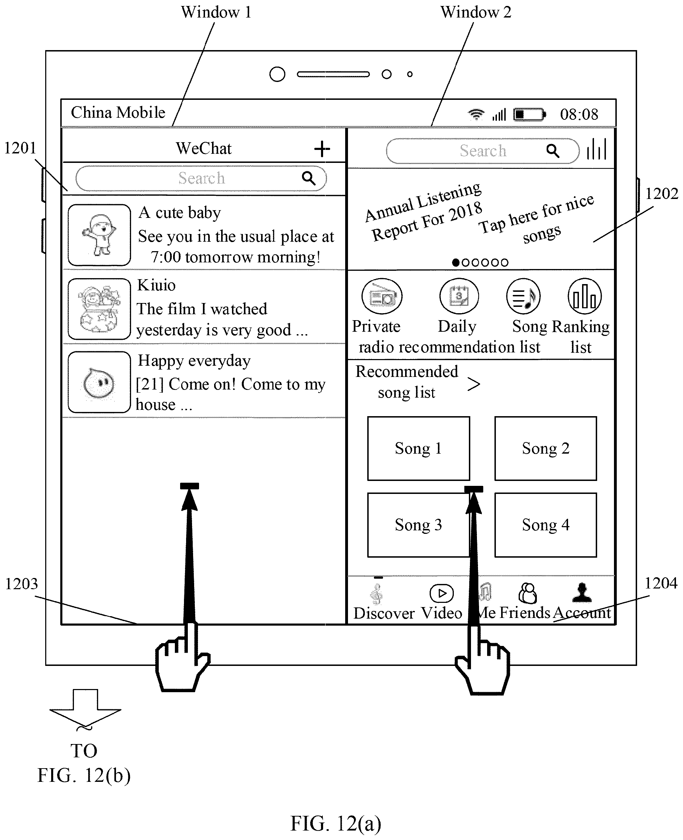

For example, with reference to FIG. 7, during split-screen display, the touchscreen of the electronic device is divided into two display areas, different windows, namely, the window 1 and the window 2, are displayed in different display areas, the operation 4 is the sliding operation 7, third preset duration is 200 ms, the third side is a side that is of the window and that is closely adjacent to the touchscreen, and the task list interface includes the combination of application identifiers. As shown in FIG. 12(a), an interface 1201 of WeChat is currently displayed in a window 1 of the touchscreen of the electronic device, and an interface 1202 of Music Player is currently displayed in a window 2. When the user wants to display the task list interface in full screen, as shown in FIG. 12(a), the user may perform the operation 4 for the window 1, and perform the operation 4 for the window 2. To be specific, the user performs, in a direction away from a side 1203 by using a finger, a sliding operation from the side 1203 that is of the window 1 and that is closely adjacent to an edge of the touchscreen, sliding duration exceeds 200 ms, the finger is not immediately lifted after the sliding operation, but is lifted after pausing for predetermined duration; and performs, in a direction away from a side 1204 by using a different finger, a sliding operation from the side 1204 that is of the window 2 and that is closely adjacent to the edge of the touchscreen, sliding duration exceeds 200 ms, the finger is not immediately lifted after sliding, but is lifted after pausing for predetermined duration.

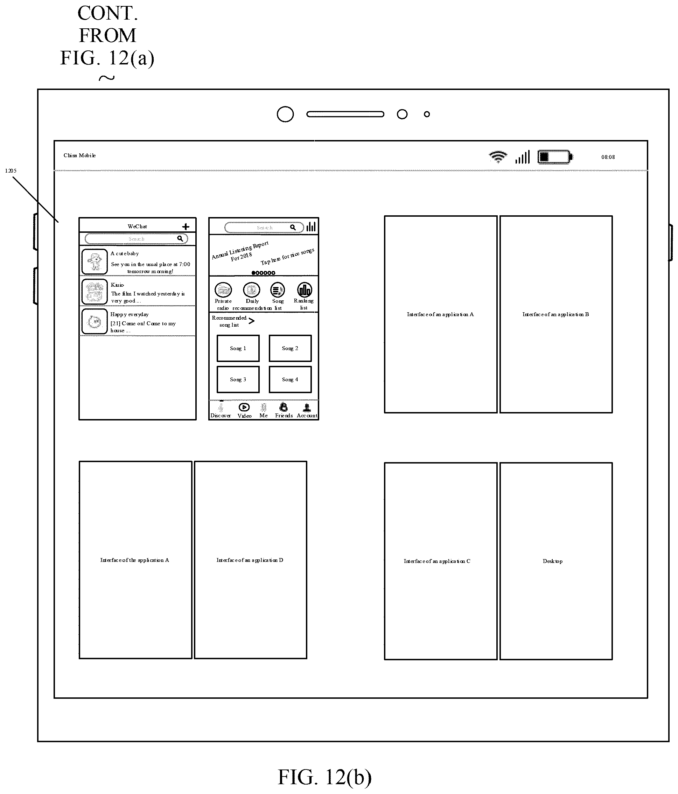

In response to the operation 4, as shown in FIG. 12(b), the electronic device may display a task list interface 1205 in full screen on the touchscreen. The task list interface 1205 includes a combination of screenshots of interfaces of applications that have been recently displayed on split screens on the touchscreen of the electronic device. For example, the user has recently displayed WeChat and Music Player, an application A and an application B, the application A and an application D, and an application C and a desktop on split screens on the touchscreen. As shown in FIG. 12(b), the task list interface 1205 includes: a combination of a screenshot of an interface displayed when WeChat exits foreground running and a screenshot of an interface displayed when Music Player exits foreground running, a combination of a screenshot of an interface displayed when the application A exits foreground running and a screenshot of an interface displayed when the application B exits foreground running, a combination of the screenshot of the interface displayed when the application A exits foreground running and a screenshot of an interface displayed when the application D exits foreground running, and a combination of a screenshot of an interface displayed when the application C exits foreground running and a screenshot of the desktop. In other words, when the electronic device detects that the user's finger slides in from a side that is of the window 1 and that is closely adjacent to the edge of the touchscreen, sliding duration is greater than 200 ms, and the finger is not immediately lifted after sliding, but is lifted after pausing for predetermined duration, and detects that the user's finger slides in from a side that is of the window 2 and that is closely adjacent to the edge of the touchscreen, sliding duration is greater than 200 ms, and the finger is not immediately lifted after sliding, but is lifted after pausing for predetermined duration, as a response, the electronic device may execute an event of displaying the task list interface in full screen. The user may trigger a combination of application identifiers in the interface (for example, tapping the combination of the identifiers), all applications corresponding to the combination of the identifiers may be switched to the foreground for display in a split-screen display form. For example, if the user performs a tapping operation on a combination of the application A and the application B that are displayed in the task list interface 1205, in response to the operation, the electronic device divides the touchscreen into two display areas: a window 1 and a window 2, displays an interface of the application A in the window 1, and displays an interface of the application B in the window 2. In addition, in some embodiments, a time point at which the electronic device executes the event of displaying the task list interface in full screen may be a moment at which the user's finger leaves the touchscreen.

In some embodiments, during split-screen display, if the user performs a sliding operation (for example, referred to as a sixth operation, where the sixth operation is a sliding operation in which a start point is a lower edge of a window, a sliding direction is away from the lower edge, and duration is greater than preset duration; or the sixth operation is a sliding operation in which a start point is a lower edge of a window, a sliding direction is away from the lower edge, and a sliding distance is greater than a third preset distance) for different windows by using different fingers, in response to the sliding operation, the electronic device may display a home screen in full screen, or switch interfaces in these windows to the background, combine these windows into one window, and display a home screen on the window obtained after combination, and an interface displayed in another window remains unchanged. When the user performs the sliding operation for all windows by using different fingers, the electronic device may display the home screen in full screen in response to the operation.

In some other embodiments, during split-screen display, if the user performs an operation 5 for a boundary between different windows, the electronic device may display the task list interface in full screen in response to the operation 5. During split-screen display, interfaces displayed in the windows are switched to the background. The fourth operation in this embodiment is used as the operation 5.

The operation 5 may be a sliding operation. For example, the operation 5 may be a sliding operation 10. A start point of the sliding operation 10 is one end of the boundary between different windows, and a sliding direction points to the other end of the boundary. For another example, the operation 5 may be a sliding operation 11. A start point of the sliding operation 11 is one end of the boundary between different windows, a sliding direction points to the other end of the boundary, and there is a pause of predetermined duration after sliding. To be specific, the electronic device first detects a sliding operation for the boundary between different windows, and continuously detects a touch and hold operation on the boundary.

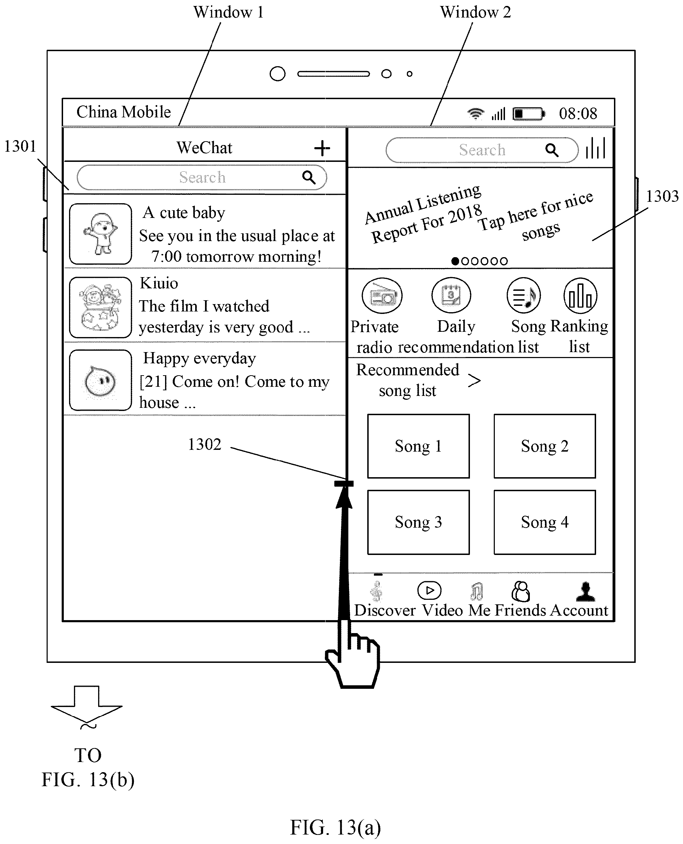

For example, with reference to FIG. 7, during split-screen display, the touchscreen of the electronic device is divided into two display areas, different windows, namely, the window 1 and the window 2, are displayed in different display areas, the operation 5 is the sliding operation 11, and the task list interface includes a combination of application identifiers. As shown in FIG. 13(a), an interface 1301 of WeChat is currently displayed in a window 1 of the touchscreen of the electronic device, and an interface 1303 of Music Player is currently displayed in a window 2. When the user wants to display the task list interface in full screen, as shown in FIG. 13(a), the user may perform the operation 5 for a boundary 1302 between the window 1 and the window 2. To be specific, the user performs, by using a finger, a sliding operation in a direction from one end (for example, an end close to a lower edge of the touchscreen) of the boundary 1302 between the window 1 and the window 2 to the other end of the boundary 1302, and does not immediately lift the finger after sliding, but pauses for predetermined duration before lifting the finger. It may be understood that the boundary 1302 may be considered as a sideline that is of the window 1 and that is closely adjacent to the window 2, or may be a sideline that is of the window 2 and that is closely adjacent to the window 1. Certainly, the two sidelines may alternatively be considered as a same sideline, that is, the boundary 1302.

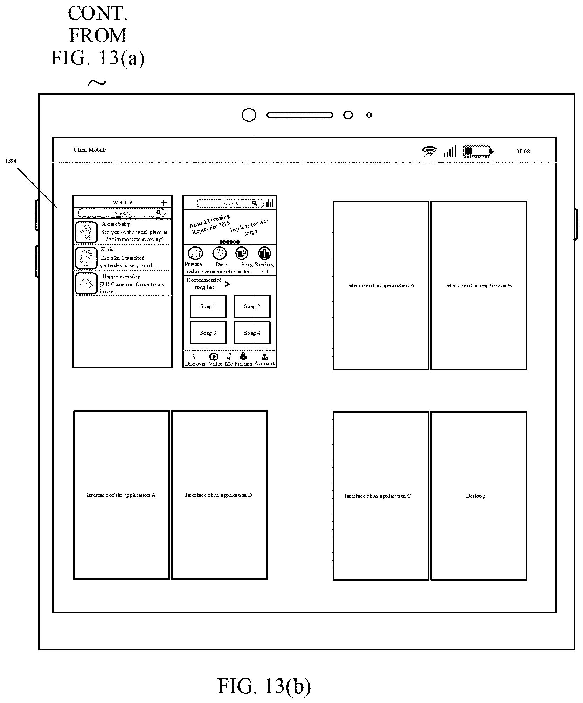

In response to the operation 5, as shown in FIG. 13(b), the electronic device may display a task list interface 1304 in full screen on the touchscreen. The task list interface 1304 includes a combination of screenshots of interfaces of applications that have been recently displayed on split screens on the touchscreen of the electronic device. For example, the user has recently displayed WeChat and Music Player, an application A and an application B, the application A and an application D, an application C and a desktop on split screens on the touchscreen, as shown in FIG. 13(b), and the task list interface 1304 includes: a combination of a screenshot of an interface displayed when WeChat exits foreground running and a screenshot of an interface displayed when Music Player exits foreground running, a combination of a screenshot of an interface displayed when the application A exits foreground running and a screenshot of an interface displayed when the application B exits foreground running, a combination of the screenshot of the interface displayed when the application A exits foreground running and a screenshot of an interface displayed when the application D exits foreground running, and a combination of a screenshot of an interface displayed when the application C exits foreground running and a screenshot of the desktop. To be specific, when the electronic device detects that the user's finger slides in from a boundary between the window 1 and the window 2, the finger is not immediately lifted after sliding, but is lifted after pausing for the predetermined duration, as a response, the electronic device may execute the event of displaying the task list interface in full screen. The user may trigger a combination of application identifiers in the interface (for example, tapping the combination of the identifiers), all applications corresponding to the combination of the identifiers may be switched to the foreground for display in a split-screen display form. For example, if the user performs a tapping operation on a combination of the application A and the application D that are displayed in the task list interface 1304, in response to the operation, the electronic device divides the touchscreen into two display areas: a window 1 and a window 2, displays an interface of the application A in the window 1, and displays an interface of the application D in the window 2. In addition, in some embodiments, a time point at which the electronic device executes the event of displaying the task list interface in full screen may be a moment at which the user's finger leaves the touchscreen.

In the operation method provided in this embodiment of this application, during split-screen display, for different interfaces displayed in a plurality of windows, the user may execute an event such as returning or exiting only for one of the plurality of windows by executing a corresponding gesture. When the plurality of windows are displayed on split screens, that is, in a split-screen display scenario, a function of quickly opening a specific interface by using an entered gesture is implemented. Efficient interaction between the electronic device and the user is implemented, and user experience is improved.

Some other embodiments of this application further provide an operation method, and the method is applied to an electronic device. When the electronic device displays an interface in full screen, the electronic device may quickly open a specific interface such as a desktop, a previous-level interface of a current interface, and a task list interface based on a gesture entered by a user by using a plurality of fingers (for example, two or more fingers).

In other words, when the electronic device displays an interface in full screen, the user may perform a corresponding operation by using a plurality of fingers, to trigger the electronic device to execute a corresponding event. For example, an event of returning to the previous-level interface, an event of displaying the desktop, or an event of displaying the task list interface is executed for a currently displayed interface. The electronic device may execute different events in response to different operations. It should be noted that, in embodiments, corresponding events to be executed by the electronic device in response to different operations performed by the user may be predefined or preconfigured in the electronic device, or may be set by the user.

For example, an example in which the user performs a corresponding operation by using two fingers is used to describe events executed by the electronic device based on different operations performed by the user. The electronic device currently displays a first interface of a first application in full screen.

The electronic device receives an operation A performed by the user by using two fingers. The electronic device displays a second interface of the first application in response to the operation A. The second interface is a previous-level interface of the first interface.

The operation A is an operation for triggering the electronic device to execute, for the currently displayed interface, the event of returning to the previous-level interface. For example, the operation A may be a sliding operation. For example, the operation A may be a sliding operation A1, a start point of the sliding operation A1 is a side edge (for example, a left side edge or a right side edge) of a touchscreen, and a sliding direction is away from the side edge. For another example, the operation A may be a sliding operation A2, a start point of the sliding operation A2 is a side edge (for example, a left side edge or a right side edge) of a touchscreen, a sliding direction is away from the side edge, and there is a pause of predetermined duration after sliding. It should be noted that the operation A may alternatively be another operation used to trigger the electronic device to execute, for the displayed interface, the event of returning to the previous-level interface. This is not specifically limited in this embodiment.

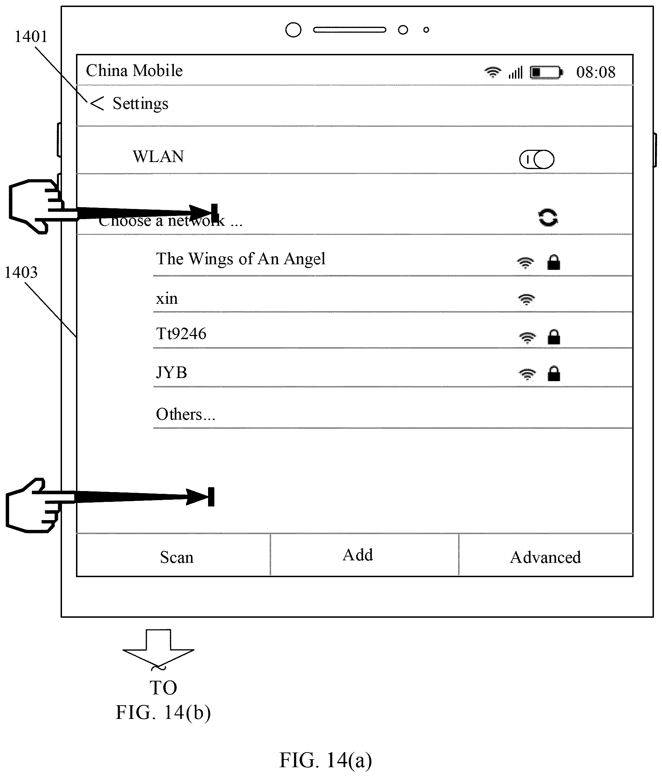

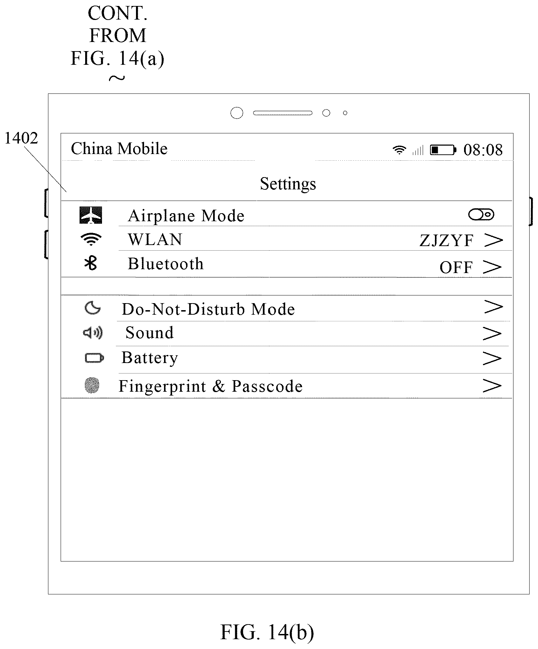

For example, with reference to FIG. 14(a) and FIG. 14(b), the operation A is the sliding operation A2. The interface currently displayed by the electronic device is a setting interface 1401 of WLAN in an application Settings. When the user wants to enable the interface 1401 to return to a previous-level interface, as shown in FIG. 14(a), the user may separately perform the operation A by using two fingers, to be specific, the user may perform, by using two fingers, a sliding operation from a side edge such as a left side edge 1403 of the touchscreen in a direction away from the left side edge 1403 (or in a direction that points to an inner side of the touchscreen), and does not immediately lift the fingers after sliding, but pauses for predetermined duration before lifting the fingers. In response to the operation A performed by using two fingers, as shown in FIG. 14(b), the electronic device may display a second interface of the application Settings on the touchscreen, for example, a home screen 1402 of the application Settings. To be specific, when the electronic device detects that the user slides from the side edge such as the left side edge of the touchscreen into the touchscreen by using two fingers, and does not immediately lift the fingers after sliding, but pauses for predetermined duration before lifting the fingers, as a response, the electronic device may execute, for the application Settings displayed on the touchscreen, an event of returning to a previous-level display interface. In addition, in some embodiments, a time point at which the electronic device executes, for an interface currently displayed on the touchscreen, the event of returning to the previous-level display interface may be a moment at which the user's fingers leave the touchscreen.

It should be noted that in this embodiment, the event executed by the electronic device in response to the operation A performed by the user by using two fingers is not limited to the foregoing event of returning to the previous-level interface. In some embodiments, the event executed by the electronic device in response to the operation A when the user performs the operation A by using two fingers may be the same as and certainly different from an event executed by the electronic device after the user performs a tapping operation on a Back (back) button in a navigation bar.

The electronic device receives an operation B performed by the user by using two fingers. The electronic device displays the desktop in response to the operation B. In other words, the electronic device enables the first application to exit foreground display.

That the application exits foreground display means that the interface of the application is not displayed on the touchscreen any longer. For example, the electronic device may switch the first application to the background for running, to stop displaying the first application on the touchscreen. For another example, the electronic device may directly enable the first application to exit running, to stop displaying the first application on the touchscreen.

The operation B is an operation for triggering the electronic device to execute the event of displaying the desktop (or an event of enabling an application currently running in the foreground to exit foreground display). For example, the operation B may be a sliding operation. For example, a start point of the sliding operation is a lower edge of the touchscreen, and a sliding direction is away from the lower edge. It should be noted that the operation B may alternatively be another operation used to trigger the electronic device to execute the event of displaying the desktop. This is not specifically limited in this embodiment.

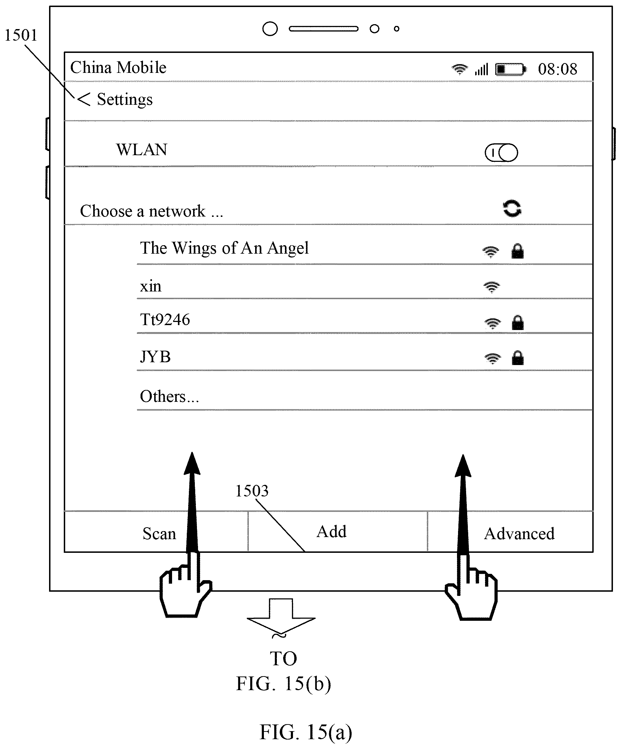

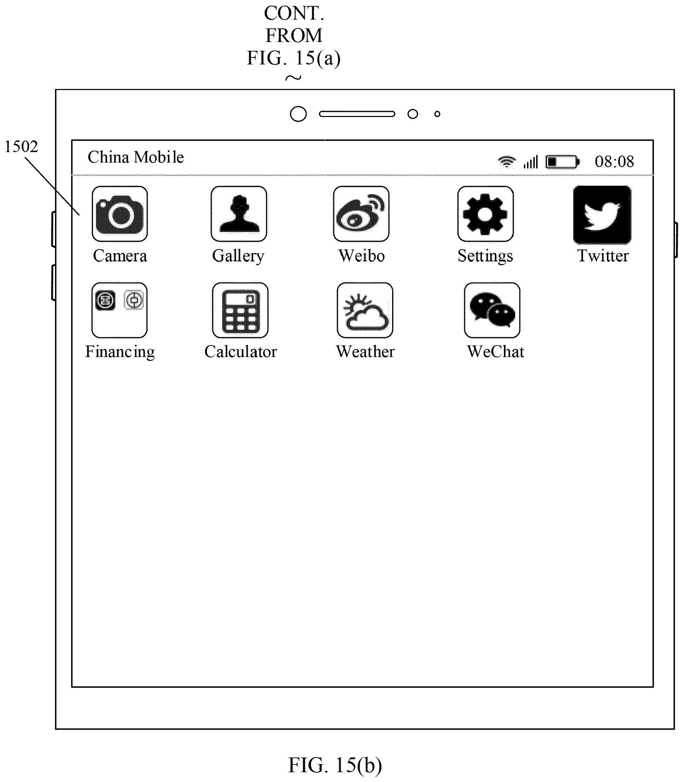

For example, with reference to FIG. 15(a) and FIG. 15(b), the interface currently displayed by the electronic device is a setting interface 1501 of WLAN in an application Settings. When the user wants to display the desktop, as shown in FIG. 15(a), the user may separately perform the operation B by using two fingers. To be specific, the user may perform, by using two fingers, a sliding operation from a lower edge 1503 of the touchscreen in a direction away from the lower edge 1503 (or in an upward direction). As shown in FIG. 15(b), the electronic device may display a desktop 1502 on the touchscreen in response to the operation B performed by two fingers. To be specific, when the electronic device detects that the user slides into the touchscreen from the lower edge of the touchscreen (or slides upwards) by using two fingers, as a response, the electronic device may execute the event of displaying the desktop, that is, display the desktop on the touchscreen, and switch an application corresponding to the currently displayed interface to background running or stop running. In addition, in some embodiments, a time point at which the electronic device executes the event of displaying the desktop may be a moment at which the user's fingers leave the touchscreen.

It should be noted that in this embodiment, the event executed by the electronic device in response to the operation B performed by the user is not limited to the foregoing event of displaying the desktop. In some embodiments, the event executed by the electronic device in response to the operation B when the user performs the operation B by using two fingers may be the same as and certainly different from an event executed by the electronic device after the user performs a tapping operation on a Home (Home) button in a navigation bar.

The electronic device receives an operation C performed by the user by using two fingers. The electronic device displays the task list interface in response to the operation C. The task list interface is similar to descriptions of the task list interface in the embodiment shown in FIG. 4, and details are not described herein again.

The operation C is an operation for triggering the electronic device to execute the event of displaying the task list interface. For example, the operation C may be a sliding operation. For example, a start point of the sliding operation is a lower edge of the touchscreen, a sliding direction is away from the lower edge, and there is a pause of predetermined duration after sliding. It should be noted that the operation C may alternatively be another operation used to trigger the electronic device to execute the event of displaying the task list interface. This is not specifically limited in this embodiment.

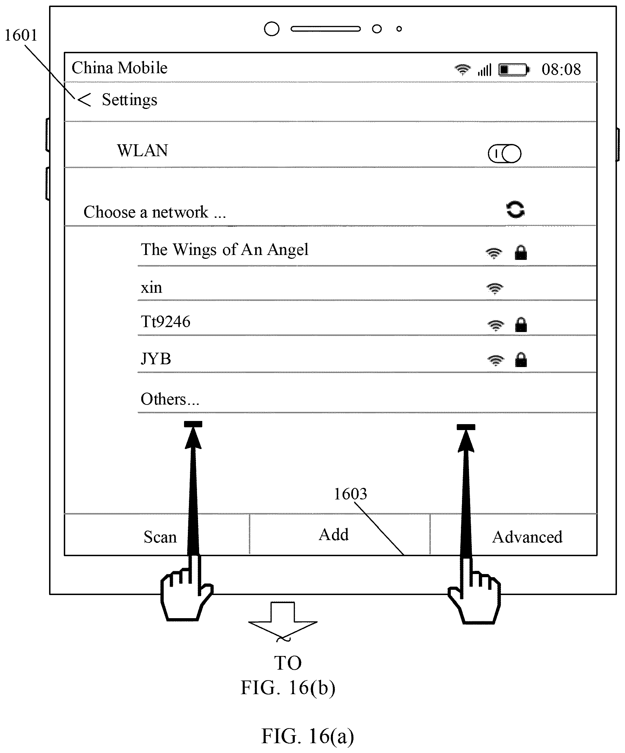

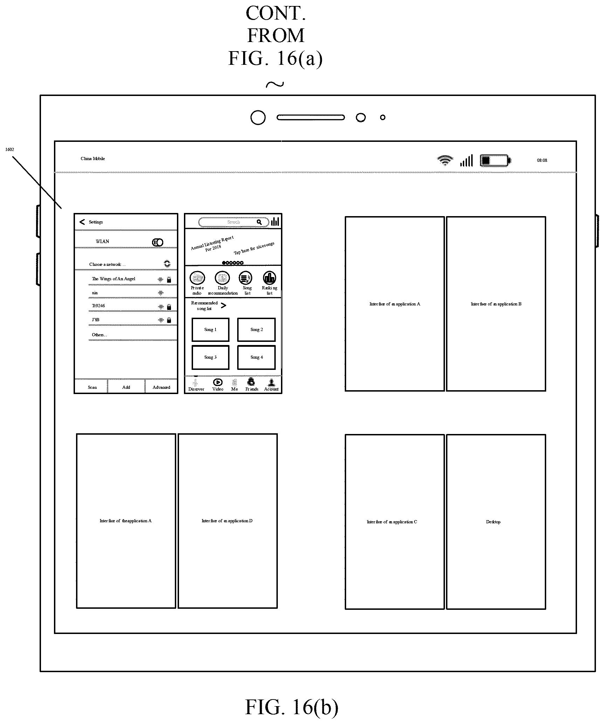

For example, with reference to FIG. 16(a) and FIG. 16(b), the interface currently displayed by the electronic device is a setting interface 1601 of WLAN in an application Settings. When the user wants to display the desktop, as shown in FIG. 16(a), the user may separately perform the operation C by using two fingers. To be specific, the user may perform, by using two fingers, a sliding operation from a lower edge 1603 of the touchscreen in a direction away from the lower edge 1603 (or in an upward direction), and does not lift the fingers after sliding, but pauses for predetermined duration before lifting the fingers. As shown in FIG. 16(b), the electronic device may display a task list interface 1602 on the touchscreen in response to the operation C performed by two fingers. For example, the task list interface 1602 includes a combination of screenshots of interfaces of applications that have been recently displayed on split screens on the touchscreen of the electronic device. To be specific, when the electronic device detects that the user slides from the lower edge of the touchscreen (or slides upwards) by using two fingers, and does not immediately lift the fingers after sliding, but pauses for predetermined duration before lifting the fingers, as a response, the electronic device may execute the event of displaying the task list interface, that is, display the task list interface on the touchscreen. The user may trigger a combination of application identifiers (for example, tapping the combination of the identifiers), all applications corresponding to the combination of the identifiers may be switched to the foreground for display in a split-screen display form. In other words, if the user performs a tapping operation on a combination of application identifiers displayed in the task list interface 1602, in response to the operation, the electronic device may divide the touchscreen into two display areas: a window 1 and a window 2, display a setting interface of WLAN in the window 1, and display an interface of Music Player in the window 2. In addition, in some embodiments, a time point at which the electronic device executes the event of displaying the task list interface may be a moment at which the user's fingers leave the touchscreen.

It should be noted that in this embodiment, the event executed by the electronic device in response to the operation C performed by the user by using two fingers is not limited to the foregoing event of displaying the task list interface. In some embodiments, the event executed by the electronic device in response to the operation C when the user performs the operation C by using two fingers may be the same as and certainly different from an event executed by the electronic device after the user performs a tapping operation on a Recent (Recent) button in a navigation bar.

Some other embodiments of this application further provide an operation method, and the method is applied to an electronic device. When receiving a specific gesture of a user, the electronic device may display a currently displayed interface in a hover box.

This embodiment includes two scenarios: a full-screen display scenario and a split-screen display scenario.

In the full-screen display scenario, an interface of a first application is currently displayed on a touchscreen of the electronic device. The electronic device receives an operation 1 of the user. In response to the operation 1, the electronic device displays a desktop on the touchscreen, and displays the interface of the first application in a hover box on the desktop.

The operation 1 is an operation for triggering the electronic device to display the current interface in a hover box. For example, the operation 1 may be a sliding operation. For example, the sliding operation may be an operation of sliding from an edge (for example, a left edge or a right edge) of the touchscreen to an inner side of the touchscreen. For another example, the sliding operation may be an operation of sliding from an edge (for example, a left edge or a right edge) of the touchscreen to an inner side of the touchscreen and there is a pause of predetermined duration after sliding. It may be understood that currently, the user may trigger, by performing a sliding operation of sliding from the left edge (or the right edge) of the touchscreen to the inner side of the touchscreen, the electronic device to display a previous-level interface of a current interface. In this embodiment, a sliding distance (for example, being referred to as a sliding distance 1) of the sliding operation for triggering the electronic device to display the current interface in a hover box is different from a sliding distance (for example, being referred to as a sliding distance 2) of a sliding operation for triggering the electronic device to display the previous-level interface of the current interface. For example, the sliding distance 1 is greater than the sliding distance 2. It should be noted that the operation 1 may alternatively be another operation used to trigger the electronic device to display the current interface in a hover box. This is not specifically limited in this embodiment.

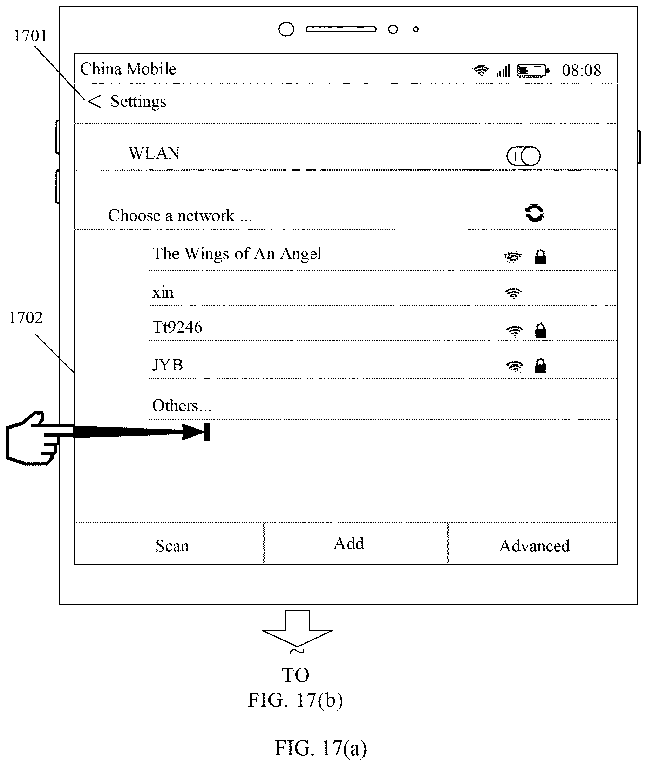

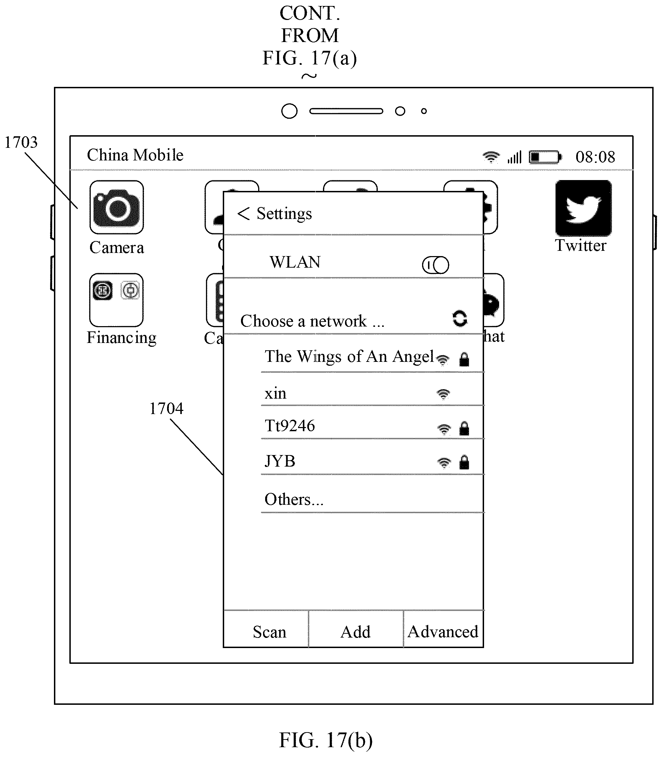

For example, with reference to FIG. 17(a) and FIG. 17(b), the interface currently displayed by the electronic device is a setting interface 1701 of WLAN in an application Settings. When the user wants to display the interface in a hover box, as shown in FIG. 17(a), the user may perform the operation 1 by using a finger. To be specific, the user may perform, by using a finger, a sliding operation from a side edge such as a left side edge 1702 of the touchscreen in a direction away from the left side edge 1702 (or in a direction that points to an inner side of the touchscreen), and does not immediately lift the finger after sliding, but pauses for predetermined duration before lifting the finger. In response to the operation 1, as shown in FIG. 17(b), the electronic device may display a desktop 1703 on the touchscreen, and display a floating window 1704 on the desktop 1703. The setting interface 1701 of WLAN is displayed in the floating window 1704. To be specific, when the electronic device detects that the user slides from a side edge of the touchscreen into the touchscreen by using a finger, and does not immediately lift the finger after sliding, but pauses for predetermined duration before lifting the finger, as a response, the electronic device may execute an event of displaying the current interface in a hover box. In addition, in some embodiments, a time point at which the electronic device executes the event of displaying the current interface in a hover box may be a moment at which the user's finger leaves the touchscreen.

In the split-screen display scenario, a touchscreen of the electronic device is currently divided into a plurality of display areas, different windows are separately displayed in the plurality of display areas, and different interfaces are displayed in different windows. The electronic device receives an operation 2 performed by the user for one of the windows, for example, a first window. In response to the operation 2, the electronic device displays, in a hover box, an interface displayed in the first window. The first operation in this application may be the operation 2.

The operation 2 is an operation for triggering the electronic device to display the current interface in the first window in a hover box. For example, the operation 2 may be a sliding operation. For example, the sliding operation may be an operation of sliding from a first side of the first window in a direction away from the first side (or towards the first window). For another example, the sliding operation may be an operation of sliding from a first side of the first window in a direction away from the first side (or towards the first window), and there is a pause of predetermined duration after sliding. It should be noted that in this embodiment, for descriptions of the first side of the first window, refer to the descriptions of corresponding content in the embodiment shown in FIG. 4. Details are not described herein again.

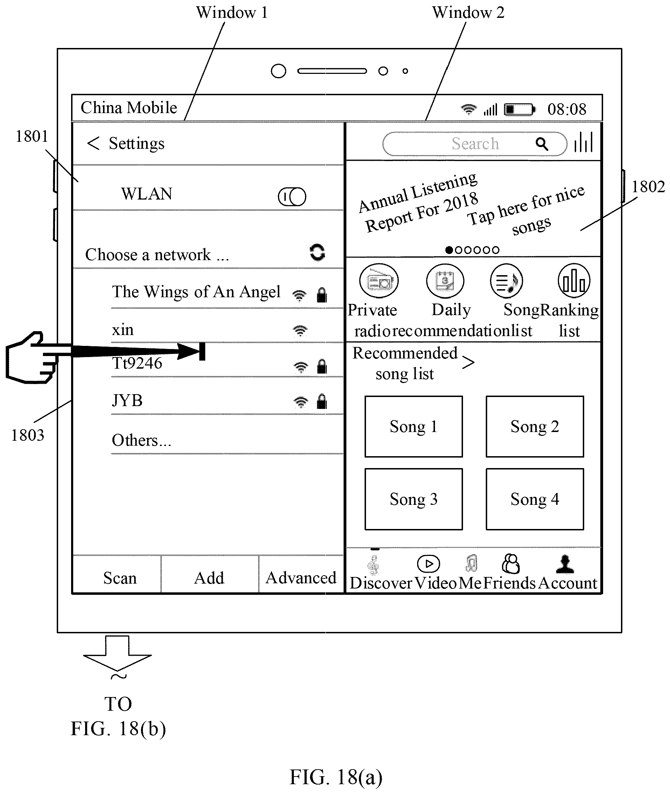

For example, with reference to FIG. 7, during split-screen display, the touchscreen of the electronic device is divided into two display areas, and different windows, namely, a window 1 and a window 2, are displayed in different display areas. For example, the first window is the window 1, and the first side is a side closely adjacent to the touchscreen. An interface of an application Settings is currently displayed in the window 1 of the touchscreen of the electronic device, for example, a setting interface 1801 of WLAN in an application Settings shown in FIG. 18(a), and an interface 1802 of Music Player is currently displayed in the window 2. When the user wants to display the setting interface 1801 of WLAN in a hover box, as shown in FIG. 18(a), the user may perform the operation 2 by using a finger. To be specific, the user may perform, by using a finger, a sliding operation from a side 1803 of the window 1 in a direction away from the side 1803(or towards the window 1), and does not immediately lift the finger after sliding, but pauses for predetermined duration before lifting the finger. In response to the operation 2, the electronic device may display the setting interface 1801 of WLAN in a hover box on the touchscreen.

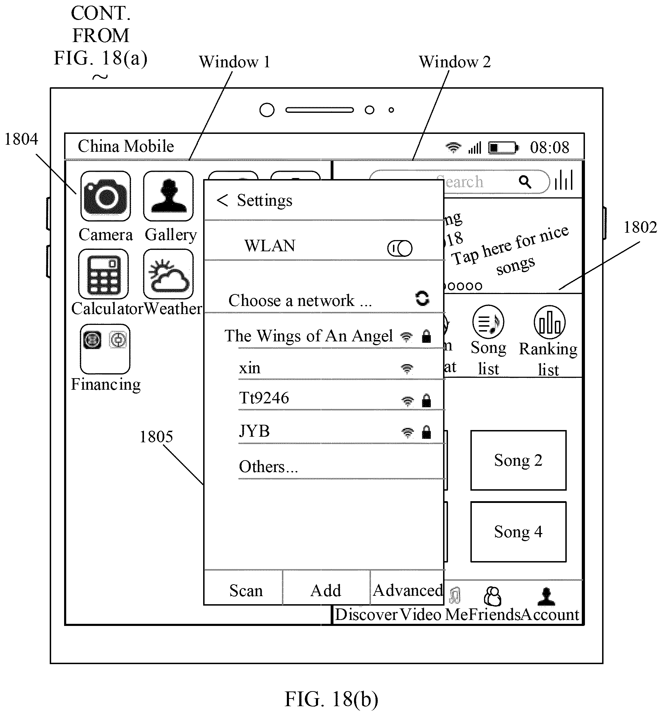

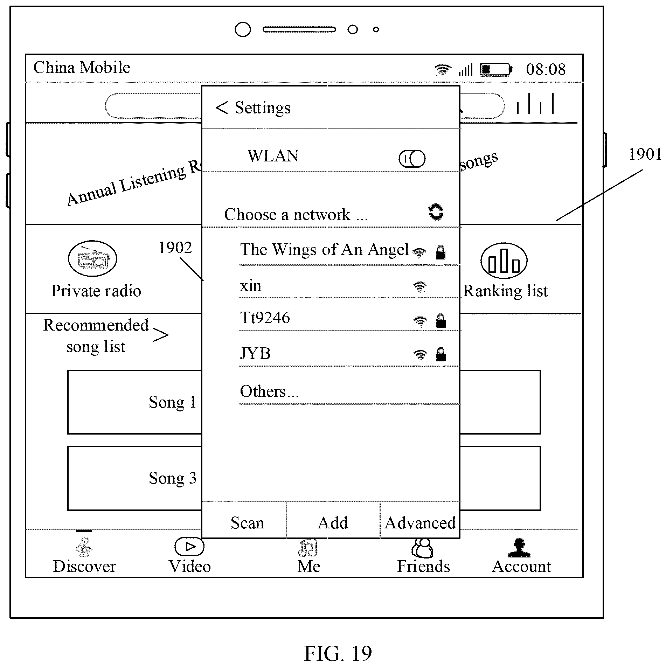

In some embodiments, as shown in FIG. 18(b), after receiving the operation 2, the electronic device may display a desktop 1804 in the window 1, and keep an interface in the window 2 unchanged, that is, the interface 1802 of Music Player is still displayed. In addition, the electronic device displays a floating window 1805 in an interface in which the desktop 1804 and the interface 1802 of Music Player are displayed on split screens, and the setting interface 1801 of WLAN is displayed in the floating window 1805. In some other embodiments, as shown in FIG. 19, after receiving the operation 2, the electronic device may minimize the window 1, and display the window 1 in a hover box (or become a floating window). As shown in 1902 in FIG. 19, an interface in the window 1 is displayed in a hover box, and the window 2 is adjusted to a same size as a size of the touchscreen. In other words, as shown in 1901 shown in FIG. 19, the interface of Music Player displayed in the window 2 is displayed in full screen. The minimizing the window 1 may be that the window 1 is adjusted to a window of a smaller size for display in response to the operation 2.

In other words, when the electronic device detects that the user slides from a side of the first window into the first window by using a finger, and does not immediately lift the finger after sliding, but pauses for predetermined duration before lifting the finger, as a response, the electronic device may execute an event of displaying the current interface in a hover box. In addition, in some embodiments, a time point at which the electronic device executes the event of displaying the current interface in a hover box may be a moment at which the user's finger leaves the touchscreen.

It should be noted that in the foregoing embodiment, in the corresponding accompanying drawings (for example, any one of FIG. 8(a) and FIG. 8(b) to FIG. 18(a) and FIG. 18(b)), a track of the sliding operation performed by the user is shown by using a straight line as an example. However, this embodiment sets no specific limitation on a sliding track of the finger on the touchscreen when the user performs the sliding operation, and the sliding track may be a straight line shown in the figure, or may be a curve with an arc.

Some other embodiments of this application further provide an electronic device. The electronic device may include a processor, a memory, and a touchscreen. The processor, the touchscreen, and the memory are coupled, and the memory is configured to store computer program code. The computer program code includes computer instructions. When the computer instructions are executed by the electronic device, the electronic device is enabled to perform the methods in the foregoing embodiments.

Some other embodiments of this application further provide a computer storage medium. The computer storage medium may include computer instructions. When the computer instructions are run on an electronic device, the electronic device is enabled to perform the steps performed by the electronic device in the foregoing embodiments.

According to some other embodiments of this application, a computer program product is further provided. When the computer program product is run on a computer, the computer is enabled to perform the steps performed by the electronic device in the foregoing embodiments.

According to some other embodiments of this application, an apparatus is further provided. The apparatus has a function of implementing behavior of the electronic device in the foregoing embodiments. The function may be implemented by hardware, or may be implemented by hardware executing corresponding software. The hardware or software includes one or more modules corresponding to the function, for example, an input unit or module and a display unit or module.

The foregoing description about the implementations allows a person skilled in the art to clearly understand that, for the purpose of convenient and brief description, division into only the foregoing function modules is used as an example for description. During actual application, the foregoing functions can be allocated to different function modules for implementation as required. In other words, an inner structure of an apparatus is divided into different function modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may be one or more physical units, in other words, may be located in one place, or may be distributed on a plurality of different places. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing description is merely a specific implementation of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. An operation method, applied to an electronic device comprising a touchscreen, wherein at least two windows are displayed on the touchscreen, different interfaces are separately displayed in the at least two windows, the at least two windows comprise a first window, and a first interface of a first application is displayed in the first window; and
the method comprises:
receiving, by the electronic device, a first operation for the first window, and displaying, by the electronic device, a second interface of the first application in the first window in response to the first operation, wherein the second interface is a previous-level interface of the first interface, and the first operation is a first sliding operation in which a start point is a first side of the first window and a sliding direction is away from the first side; or
receiving, by the electronic device, a second operation for the first window, and displaying, by the electronic device, a home screen in the first window in response to the second operation, wherein the second operation is a second sliding operation in which a start point is a first side of the first window and a sliding direction is first away from the first side and then towards the first side, or the second operation is a third sliding operation in which a start point is a first side of the first window and a sliding direction is away from the first side; or
receiving, by the electronic device, a third operation for the first window, and displaying, by the electronic device, a task list interface in the first window in response to the third operation, wherein the third operation is a fourth sliding operation in which a start point is a first side of the first window and a sliding direction is away from the first side, and the task list interface comprises at least one of the following application identifier combinations: a combination of application identifiers that have been recently displayed on split screens on the touchscreen, a combination of predefined application identifiers displayed on split screens, and a combination of application identifiers displayed on split screens and determined by the electronic device based on a use habit; wherein
the at least two windows further comprise a second window adjacent to the first window, and the first side is a side that is of the first window and that is closely adjacent to the second window.

2. The method according to claim 1, wherein the displaying, by the electronic device, a second interface of the first application in the first window in response to the first operation comprises:
displaying, by the electronic device, the second interface of the first application in the first window in response to the first operation when determining that the first interface is not an initial interface of the first application.

3. The method according to claim 1, wherein the method further comprises:
displaying, by the electronic device, the home screen in the first window in response to the first operation when determining that the first interface is an initial interface of the first application.

4. The method according to any one of claims 1 to 3, wherein
duration of the first sliding operation is less than or equal to first preset duration; or
a sliding distance of the first sliding operation is less than or equal to a first preset distance; or
the sliding direction of the first sliding operation is a first preset direction.

5. The method according to any one of claims 1 to 3, wherein
duration of sliding in a direction away from the first side in the second sliding operation is less than or equal to second preset duration; or a sliding distance in a direction away from the first side in the second sliding operation is less than or equal to a second preset distance; or
duration of the third sliding operation is greater than first preset duration; a sliding distance of the third sliding operation is greater than a first preset distance; or the sliding direction of the third sliding operation is a second preset direction.

6. The method according to any one of claims 1 to 3, wherein
duration of the fourth sliding operation is greater than third preset duration, and there is a pause of predetermined duration after sliding; or
a sliding distance of the fourth sliding operation is greater than a third preset distance, and there is a pause of predetermined duration after sliding; or
the sliding direction of the fourth sliding operation is a third preset direction.

7. The method according to any one of claims 1 to 3, wherein the method further comprises:
receiving, by the electronic device, a fourth operation for the first side of the first window; and
displaying, by the electronic device, the task list interface in full screen on the touchscreen in response to the fourth operation.

8. The method according to claim 7, wherein
the fourth operation is a sliding operation in which a start point is one end of the first side and a sliding direction is towards the other end of the first side; or
the fourth operation is a sliding operation in which a start point is one end of the first side, a sliding direction is towards the other end of the first side, and there is a pause of predetermined duration after sliding.

9. The method according to any one of claims 1 to 3, wherein the method further comprises:
receiving, by the electronic device, a fifth operation for the first window, and receiving a fifth operation for the second window; and
displaying, by the electronic device, the task list interface in full screen on the touchscreen in response to the fifth operation for the first window and the fifth operation for the second window.

10. The method according to claim 9, wherein
the fifth operation is a sliding operation in which a start point is a second side of the window, a sliding direction is away from the second side, duration is greater than third preset duration, and there is a pause of predetermined duration after sliding; or
the fifth operation is a sliding operation in which a start point is a second side of the window, a sliding direction is away from the second side, a sliding distance is greater than a third preset distance, and there is a pause of predetermined duration after sliding.

11. The method according to any one of claims 1 to 3, wherein the method further comprises:
receiving, by the electronic device, a sixth operation for the first window, and receiving a sixth operation for the second window; and
displaying, by the electronic device, the home screen in full screen on the touchscreen in response to the sixth operation for the first window and the sixth operation for the second window.

12. The method according to claim 11, wherein
the sixth operation is a sliding operation in which a start point is a second side of the window, a sliding direction is away from the second side, and duration is greater than second preset duration; or
the sixth operation is a sliding operation in which a start point is a second side of the window, a sliding direction is away from the second side, and a sliding distance is greater than a third preset distance.

13. An operation method, applied to an electronic device comprising a touchscreen, wherein a first window and a second window are displayed on the touchscreen, a first interface is displayed in the first window, a second interface is displayed in the second window, and the first interface is different from the second interface; and
the method comprises:
receiving, by the electronic device, a first operation for the first window; and
in response to the first operation, displaying, by the electronic device, the second interface in full screen on the touchscreen, and displaying the first interface in a hover box in the second interface; or in response to the first operation, displaying, by the electronic device, a home screen in the first window, and displaying the first interface in a hover box on the home screen and the second interface that are displayed on split screens.

14. The method according to claim 13, wherein
the first operation is a sliding operation in which a start point is a first side of the first window and a sliding direction is away from the first side; or
the first operation is a sliding operation in which a start point is a first side of the first window, a sliding direction is away from the first side, and there is a pause of predetermined duration after sliding.

15. The method according to claim 14, wherein the first side is a side that is of the first window and that is closely adjacent to the second window, or the first side is a side that is of the first window and that is closely adjacent to the touchscreen.

16. An electronic device, wherein the electronic device comprises a processor, a memory, and a touchscreen, at least two windows are displayed on the touchscreen, different interfaces are separately displayed in the at least two windows, the processor, the touchscreen, and the memory are coupled, the memory is configured to store computer program code, the computer program code comprises computer instructions, and when the computer instructions are executed by the electronic device, the electronic device is enabled to perform the operation method according to any one of claims 1 to 15.

17. A computer-readable storage medium, comprising computer software instructions, wherein
when the computer software instructions are run on an electronic device, the electronic device is enabled to perform the operation method according to any one of claims 1 to 15.
